# EUROPEAN PATENT APPLICATION

(11) **EP 1 139 254 A1**
(43) Date of publication of application: **04.10.2001**
(21) Application number: 01108129.6
(22) Date of filing: 30.03.2001
(51) Int. Cl.: G06F 17/60

(54) **Method and apparatus for counterparty communications and brokering transactions**

(30) Priority: 30.03.2000 GB 0007791
(71) Applicant: Delve Corporation Ltd, London, WIR 9FA (GB)
(72) Inventor: Cambell, Casey, London, WIR 9FA (GB); Ramchandani, Sanjeev, London, WIR 9FA (GB)
(74) Representative: JENSEN & SON

(57) **Abstract**

A method for brokering commercial transactions between an originator and a provider through a communications network includes the steps receiving provider criteria from each of a plurality of providers, wherein at least one of the provider criteria is included in requests for proposals forwarded to the respective provider, receiving a request for proposal from an originator, the request for proposal including originator criteria, wherein at least one of the originator criteria is included in proposals received by the originator; comparing the originator criteria included in the request for proposal with the provider criteria of a group of the plurality of providers, selecting one or more providers from the group of the plurality of providers, the selected one or more providers having at least one of their respective provider criteria matching at least one of the originator criteria, providing the request for proposal to the selected one or more providers, receiving a proposal in response to the request for proposal from at least one of the selected one or more providers, and providing the proposal to the originator.

## Description

The present invention relates generally to computerized exchange transactions and, more particularly, to brokering transactions.

In the prior art, a potential borrower who needs financing for a large scale commercial project, such as a power station or a new aircraft delivery, has to contact many people and go through a complicated process. The borrower seeks advice from specialized agents on which financial structure to use. Often these structures will incorporate highly specialized tax and accounting benefits (e.g. leases). Either directly, or through the agent, the borrower then seeks both equity investors and lenders to participate in this particular financing.

Lenders usually are identified based upon their ongoing relationship with the borrower, or borrower's agent, and their track-record (i.e. a relationship bank or participant in similar financings in the past). Initial requests for proposal would normally be communicated from the borrower, or borrower's agent, to the lenders by personal meeting or telephone and then by fax. Once a lending syndicate has been identified, detailed negotiations commence.

There are many features of this negotiation process. Usually additional lenders (participating lenders) are introduced to the transaction by the primary lenders as a means of spreading or syndicating the risk. The primary lenders typically negotiate a bilateral fee directly with each participant for introducing them to the transaction. The borrower usually is not privy to and has no control over this arrangement and, consequently, has only an indirect sense of what the "true market" price for their borrowing is.

To avoid collusion between lenders, the verbal, telephone and fax communication sequence discussed above with reference to the initial requests for proposal is typically repeated individually with all potential lenders in the transaction. Any questions/clarifications would again be provided by means of personal contact, telephone and fax communications to each participant.

Because of the work intensive nature of this process, this is a time consuming process and borrowers often stop soliciting additional participants once their borrowing requirement is covered. If insufficient lenders are identified within this process, the borrower, or borrower's agent, may cold call financial institutions who they do not have relationships with by telephone and invite them to participate. Finding the right person to speak to can be very time consuming.

To accelerate the process, some borrowers will seek "underwritten" offers from the primary lenders identified by personal contact above. In this case, the underwriter (primary lender) is responsible for all communications with any additional participants and retains any difference between the cost of debt capital quoted to the borrower, and the actual cost achieved in the syndicating process. The underwriter also assumes the risk of not being able to syndicate the transaction.

Typically, each lender must re-process the information communicated verbally and by fax for their own internal evaluation (e.g. verification of spreadsheet calculations) and processing (e.g. credit reviews). Separately, due to increased staffing fluidity and shifting risk appetites amongst lenders, the cost of monitoring which potential lenders/participants may be interested in a given transaction is increasing rapidly. In addition, historically (i.e. past transaction) based monitoring techniques are losing their effectiveness.

Also in the prior art, once counterparties are involved in a transaction, a myriad of documents and revisions of documents are exchanged between the various counterparties. The problem with this process is that the documents may be several hundred pages in length and usually such exchange occurs by fax, which is very time consuming. In addition, when the faxes originate from counsel and the distribution list comprises many lenders in foreign countries, the communications (fax) fees billed to the borrower can be several thousands of dollars. Actual receipt by the intended recipient is then usually confirmed by telephone and any proposed changes to the documents must then be added by hand and faxed back to the originator before being transcribed onto a new document draft. Given the confidential nature of most such financing, there are ongoing concerns about the security of such fax transmissions

Thus, a need exists for a more efficient and economical method for brokering transactions and for enabling counterparties to the transaction to more easily manage the documentation phase of a deal.

In accordance with one embodiment of the present invention, a method for brokering commercial transactions between an originator and a provider through a communications network includes the steps receiving provider criteria from each of a plurality of providers, wherein at least one of the provider criteria is included in requests for proposals forwarded to the respective provider, receiving a request for proposal from an originator, the request for proposal including originator criteria, wherein at least one of the originator criteria is included in proposals received by the originator; comparing the originator criteria included in the request for proposal with the provider criteria of a group of the plurality of providers, selecting one or more providers from the group of the plurality of providers, the selected one or more providers having at least one of their respective provider criteria matching at least one of the originator criteria, providing the request for proposal to the selected one or more providers, receiving a proposal in response to the request for proposal from at least one of the selected one or more providers, and providing the proposal to the originator.

As a result, the present invention expedites and facilitates the process of brokering commercial transactions, particularly, large scale commercial transactions. A server receives criteria from providers and stores it in a provider database. The criteria indicate the type of requests for proposals the provider is interested in receiving. For example, a provider may want to receive requests for proposals involving a particular business sector. When the server receives a request for a proposal from an originator, the server applies filters to the provider database to identify criteria in the provider database matching criteria specified by the originator or by the system. The server selects the providers having the matching criteria and sends them the request for proposal. When proposals from these providers are received, the server forwards them to the originator.

In one embodiment, the identities of the originator and/or the providers are kept confidential. Thus, the process takes place anonymously.

In an alternate embodiment, the providers selected by the server as having the matching criteria are put on an initial distribution list. The server then checks the provider database to determine whether any of the providers have criteria which conflicts with criteria specified by the originator or by the system. If a conflict exists, the server removes the provider from the initial distribution list.

The method may comprise the steps of determining whether a provider of the one or more providers on the initial distribution list has provider criteria which does not match originator criteria in the request for proposal, determining whether the provider will accept requests for proposals having originator criteria that does not match the provider criteria, and removing the provider from the initial distribution list when the provider will not accept requests for proposals having originator criteria that does not match the provider criteria and maintaining the provider on the initial distribution list when the provider will accept requests for proposals having originator criteria that does not match the provider criteria.

In another embodiment, the server may also remove a provider from the initial distribution list if the provider has criteria which does not match the criteria specified by the originator of by the system. This method comprises the steps of determining whether a provider of the one or more providers on the initial distribution list has provider criteria conflicting with the originator criteria, and removing the provider from the initial distribution list when the provider has provider criteria conflicting with the originator criteria.

The method may also include determining whether a provider of the one or more providers on the initial distribution list has indicated not to receive requests for proposals from the originator, and removing the provider from the initial distribution list when the provider has indicated not to receive requests for proposals from the originator.

In another embodiment, the server reviews the criteria of an unselected provider to determine whether a modification to the criteria may be made so that the unselected provider may be added to the group of providers selected to receive the request for proposal. For example, if an unselected provider's maximum funding criteria is less than that sought by the originator by twenty thousand dollars, the server may suggest that the unselected provider increase its maximum funding criteria by twenty thousand dollars so that it may receive a request for proposal. The unselected provider then has the option of modifying its criteria so as to receive a request for proposal.

The method may comprise the steps of reviewing the provider criteria of an unselected provider to determine whether a modification to the provider criteria may be made so that the unselected provider may be added to the selected one or more providers, and sending a notification suggesting the modification to the unselected provider.

In another embodiment, the unselected provider must modify the criteria within a predetermined in order to receive the request for proposal. The method may comprise the steps of receiving a modification request from the unselected provider to modify the provider criteria in accordance with the modification suggested, modifying the criteria of the unselected provider, adding the unselected provider to the selected one or more providers, and providing the request for proposal to the unselected provider.

In a further embodiment of the invention the method further comprises the steps of reviewing originator criteria in the request for proposal to determine whether a modification to the originator criteria may be made so that an unselected provider may be added to the selected one or more providers, and sending a notification suggesting the modification to the originator.

The method may further comprise the steps of receiving a modification request from the originator to modify the originator criteria in the request for proposal in accordance with the modification suggested, modifying the originator criteria in the request for proposal, adding the unselected provider to the selected one or more providers, and providing the request for proposal with the modification to the provider.

In a further embodiment of the invention a method is provided for brokering commercial transactions between an originator and a provider through a communications network, the method comprising the steps of receiving provider criteria from each of a plurality of providers, wherein at least one of said provider criteria is included in requests for proposals forwarded to said respective provider, storing said provider criteria in a database, receiving a request for proposal from an originator, the request for proposal having one or more primary criteria, filtering said database to identify a group of the plurality of providers having provider criteria matching the one or more primary criteria; selecting one or more providers from the group of the plurality of providers, the selected one or more providers having provider criteria matching the one or more primary criteria, providing the request for proposal to the selected one or more providers, receiving a proposal in response to the request for proposal from at least one of the selected one or more providers, and providing the proposal to the originator.

The primary criteria may comprise one or more of industry sector, financing type, asset type, project type, geographic location, amount of funding requested by the originator, credit information, scope of distribution of request for proposal to providers, and deadline for accepting a response to the request for proposal.

The provider criteria may comprise one or more of industry sector, financing type, asset type, project type, geographic location, amount of funding requested by the originator, credit information, scope of distribution of request for proposal to providers, and deadline for accepting a response to the request for proposal.

In yet another embodiment of the present invention, a method for facilitating the exchange of documents includes the steps of receiving a request to create a document exchange directory for a transaction, receiving information on a group of users involved in the transaction, providing the group of users involved in the transaction with access to said document exchange directory, receiving a request from one of the group of users to submit a document to the document exchange directory, storing said document in the document exchange directory, and providing each of the group of users with one or more access rights to the document. In this way, counterparties to the transaction can more easily manage the documentation phase of a deal.

The group of users may comprise one or more of an originator, a user affiliated with the originator, a provider, a user affiliated with the provider, and an administrator. The group of users may be notified of the creation of the document exchange. Each of the group of users may be provided with one or more access rights to the document, the access rights comprising one or more of: no access to document access right, viewing the document access right, retrieving the document access right, and viewing the group of members having access to the document access right. The group of users involved in the transaction with access to the document exchange directory may be enabled to perform one or more of communicating with each other; viewing information on each user of the group of users, submitting documents to the document exchange directory, and viewing retrieved documents. A request may be received from one user of the group of users to have a document stored in the document exchange facility, said request providing one or more access rights to at least one user of the group of users. The selected one or more users of the document submitted may be notified.

In a further embodiment of the invention an apparatus is provided for brokering commercial transactions between an originator and a provider through a communications network, comprising a storage device, and a processor coupled to the storage device, the storage device storing a program for controlling the processor. The processor is configured to receive provider criteria from each of a plurality of providers, wherein at least one of said provider criteria is included in requests for proposals forwarded to said respective provider, receive a request for proposal from the originator, the request for proposal including originator criteria, wherein at least one of the originator criteria is included in proposals received by the originator, and compare the originator criteria included in the request for proposal with the provider criteria of a group of the plurality of providers, select one or more providers from the group of the plurality of providers, the selected one or more providers having at least one of their respective provider criteria matching at least one of the originator criteria, provide the request for proposal to the selected one or more providers, receive a proposal in response to the request for proposal from at least one of the selected one or more providers, and provide the proposal to the originator.

In a further embodiment of the invention a document exchange is provided for facilitating the exchange of documents between users on a communication network, comprising a storage device and a processor coupled to the storage device, the storage device storing a program for controlling the processor. The processor is configured to receive a request to create a document exchange directory for a transaction, receive information on a group of users involved in the transaction, provide the group of users involved in the transaction with access to said document exchange directory stored on the storage device, receive a request from one of the group of users to submit a document to the document exchange directory, store said document in the document exchange directory, and provide each of the group of users with one or more access rights to the document.

Exemplary embodiments of the invention are described in greater detail below with reference to and as illustrated in the drawings.
FIG. 1 is a schematic illustration of a system for counterparty communications and brokering transactions in accordance with the present invention.
FIG. 2 is a schematic illustration of a controller of the system of FIG. 1.
FIG. 3 is an illustration of exemplary records of the originator database of the controller of FIG. 2.
FIG. 4 is an illustration of exemplary records of the provider database of the controller of FIG. 2.
FIG. 5 is an illustration of exemplary records of the inquiry database of the controller of FIG. 2.
   FIG. 6 is an illustration of an exemplary inquiry report generated by the system of FIG. 1.
FIG. 7 is an illustration of exemplary records of the response database of the controller of FIG. 2.
FIGs. 8A-8B are flowcharts depicting a method of brokering transactions in accordance with the present invention.
FIG. 9 is a flowchart depicting a method for creating a provider distribution list in accordance with the present invention.
FIG. 10 is a schematic illustration of another embodiment of a system for counterparty communications and brokering transactions which includes a document exchange facility.
FIG. 11 is a schematic illustration of a deal database of the controller of FIG. 10.
FIG. 12 is a schematic illustration of a submitted document database of the controller of FIG. 10.
FIG. 13 is a schematic illustration of a retrieved document database of the controller of FIG. 10.
FIG. 14 is a flowchart depicting a method of facilitating the exchange of documents in accordance with the present invention.
FIG. 15 is a flowchart depicting a method of entering an existing document exchange in accordance with the present invention.
FIG. 16 is a flowchart depicting a method of retrieving a document from the document exchange in accordance with the present invention.
FIG. 17 is an exemplary screen of a document exchange web page in accordance with the present invention.
FIG. 18 is an exemplary screen of another document exchange web page in accordance with the present invention.
FIG. 19 is an exemplary screen of yet another document exchange web page in accordance with the present invention.
FIG. 20 is an exemplary screen of still another document exchange web page in accordance with the present invention.
FIG. 21 is an exemplary screen of still another document exchange web page in accordance with the present invention.
FIG. 22 is an exemplary screen of still another document exchange web page in accordance with the present invention.
FIG. 23 is an exemplary screen of still another document exchange web page in accordance with the present invention.
FIG. 24 is a schematic illustration of an embodiment of a controller of the system of FIG. 10.

### DETAILED DESCRIPTION OF THE PREFERRED EMBODIMENTS

The present invention may be embodied as a computer program developed using an object oriented language that allows the modeling of complex systems with modular objects to create abstractions that are representative of real world, physical objects and their interrelationships. However, it would be understood by one of ordinary skill in the art that the invention as described herein can be implemented in many different ways using a wide range of programming techniques as well as general purpose hardware systems or dedicated controllers.

In a system embodying the present invention, a communication server receives an inquiry for debt financing from an originator, such as a borrower, a seller, an agent for a borrower or an agent for a seller (the "originator"). The inquiry is a request for a debt financing or purchase proposal from interested providers, such as lenders or investors (the "providers"). It will be appreciated that the term originator is used interchangeably with the terms borrower or seller and that the term provider is used interchangeably with the terms lender or purchaser, throughout the specification. In a preferred embodiment, each request falls within an industry sector, such as, telecommunications, shipping, and aviation. In addition, the request can specify a financing type, such as, project finance, asset-backed debt, non-asset-backed debt, or leasing. However, non-financial transactions may also be serviced by the invention. Each request is customized by the originator to satisfy the originator's current financial needs. Thus, each such request for proposal ("RFP") is unique, depending upon the originator's needs. In one embodiment of the present invention, the broker transaction system maintains a database of registered originators who have submitted requests for proposals.

The broker transaction system ("the system") also maintains a database of registered providers interested in being given an opportunity to bid on certain types of credit facility or sale transactions. When a provider registers with the system, the provider specifies its preferred area of interest, such as, a particular industry sector. The provider may also specify a particular financing type in which it is interested. This preference information is accessible only by the system administrators and the provider. When a communication server within the system receives the RFP from an originator, the communication server matches the RFP with registered providers who have expressed an interest in the financing and/or industry sector specified in the originator's RFP. In response to the RFP distributed to the selected providers, the communication server receives provisional electronic proposals from the providers interested in participating in the transaction. The broker transaction system ranks these proposals electronically as instructed by the originator. Once the proposals have been ranked, the results are collated and a report is sent to the originator. The originator may then negotiate with the one or more providers participating in the transaction, if necessary, to completely define the required loan product. The originator then mandates one or more providers to complete the transaction. The communication server can also facilitate any further communication between the provider and originator to complete the transaction.

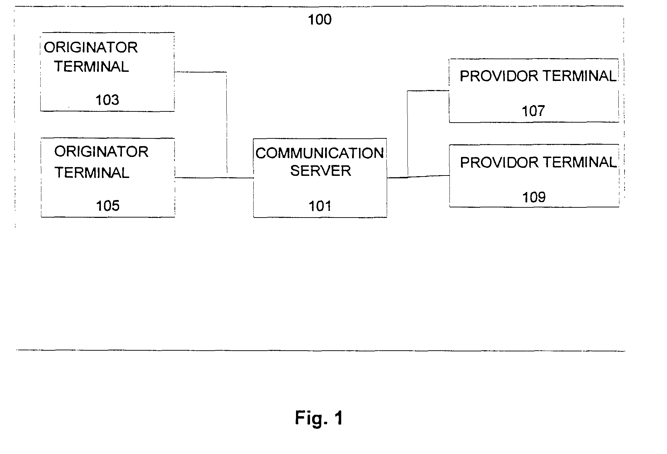

An example of a system embodying the present invention is illustrated in Fig. 1. A system 100, according to the present invention includes a communication server 101 in communication with one or more originator terminals 103, 105 (two are shown in Fig. 1 for illustrative purposes only, more or fewer originator terminals can be supported) and one or more provider terminals 107, 109 (two are shown in Fig. 1 for illustrative purposes only, more or fewer provider terminals can be supported).

The communication server 101 can be embodied as a system controller, a dedicated hardware circuit, a programmed general purpose computer, or any other functionally equivalent configurable electronic, mechanical, or electro-mechanical device. The originator and provider terminals 103, 105, 107, 109 can likewise be embodied as dedicated hardware circuits, programmed general purpose computers, personal computers, televisions, telephones, pagers, palmtop computers, or any other functionally equivalent configurable electronic, mechanical, or electro-mechanical devices. The terminals can be in communication with the communication server 101 via a network such as a Local Area Network (LAN), a Wide Area Network (WAN), a Public Switched Phone Network (PSTN), a cable network, or an Internet Protocol (IP) network, such as an intranet, extranet, or internet. Communication may also be provided by dedicated data lines, cellular, Personal Communication Systems ("PCS"), microwave or satellite networks. Using these components, the present invention provides a method, apparatus and system for brokering transactions.

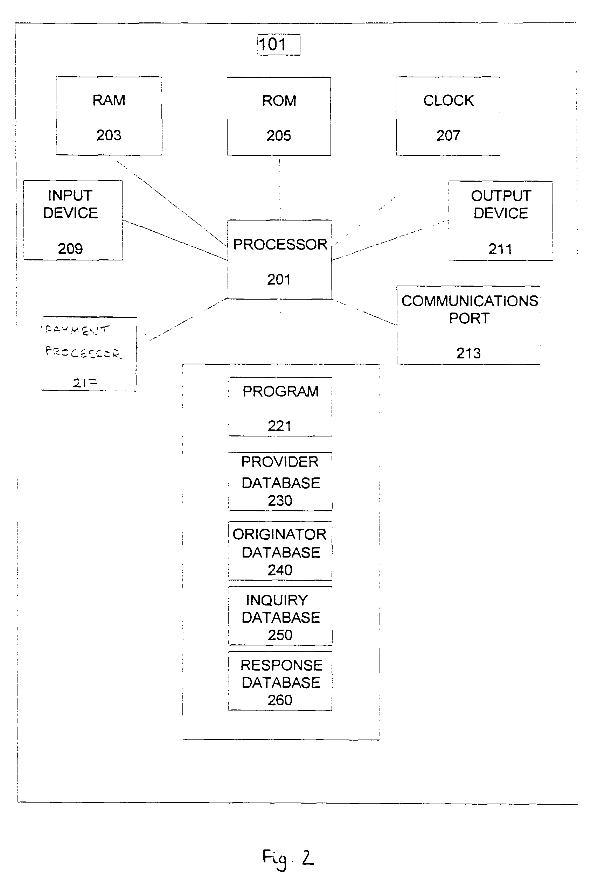

Referring now to Fig. 2, an embodiment of communication server 101 is illustrated. Communication server 101 includes a processor 201, RAM (Random Access Memory) 203, ROM (Read Only Memory) 205, a clock 207, an input device 209, an output device 211, a communications port 213 and a data storage device 220. In an alternate embodiment, the communication server 101 is further in communication with a payment processor 217 that may include one or more conventional microprocessors, supporting the transfer and exchange of payments, charges, or debits, attendant to the method of the apparatus. Payment processor 217 can also be configured as part of processor 201. Processing of letters of credit, debt, or other financial account transactions or non-financial transactions by payment processor 217 may be supported with commercially available software. The broker transaction server may use this payment processor 217 in order to debit or credit a financial account of an originator or a provider.

A conventional computer or workstation with sufficient memory and processing capability may be used as the communication server 101. In a preferred embodiment, the communication server 101 operates as a web server for an Internet environment, transmitting and receiving data related to financial or other transactions generated by originators and providers, and is capable of high volume transaction processing, performing a significant number of mathematical calculations in processing communications and database searches. A Pentium microprocessor such as the PIII, manufactured by Intel Corporation may be used for processor 201. Equivalent processors are available from Motorola, Inc. or Sun Microsystems, Inc. Processor 201 may comprise one or more microprocessors.

The input device 209 may comprise one or more input devices 209, such as or in conjunction with a keyboard, mouse, touch screen or conventional voice recognition software package, and allows a system administrator, to input information regarding an RFP, originators, and providers. Alternatively, the input devices 209 may be telephone keypads for use with an interactive voice response unit ("IVRU") technology in telephone systems. In such a system, using a telephone, providers and/or originators are prompted by the IVRU within the communication server 101 to input certain information, such as their user name, and the project identifier to determine if any RFPs have been received if the provider is accessing the server 101 or if any responses have been received if the originator is accessing the server 101. Such an embodiment of the communication server 101 affords providers an alternate mechanism to review their account and even respond to RFPs and affords originators an alternate mechanism to review their account to determine if any responses have been received.

The output device 211 may comprise one or more output devices 211 in the form of video displays, electro-luminescent arrays, liquid crystal display panels, printers, or functionally equivalent devices, and may be operable to display information regarding the status of a trade being computed in the processor 201.

The clock 207 may be operable to synchronize the communication server 101, determining the date and time the communication server 101 receives information regarding transactions, as well as for time related calculations in alternate embodiments described below, such as an amount of time until the expiration date of a proposal. The processor 201 communicates with originator and provider terminals 103, 105, 107, 109 via the communications port 213. The communications port 213 may be implemented using a T 1 communications board, a serial port and modem, a LAN adapter, infrared communication, serial connection, satellite, microwave, or any functionally equivalent processor communications system.

Data storage device 220 may be implemented using a persistent memory system which may include random access memory, hard disk drives and/or other appropriate combination of electronic or optical data recording units, which include CD-ROM drives and micro-disk drives. The processor 201 and the data storage device 220 may each be (i) located entirely within a single computer or other computing device, (ii) connected to each other by a remote communication medium, such as a serial port cable, telephone cable, telephone line or radio frequency, or (iii) a combination thereof. In one embodiment, the communication server 101 may comprise one or more computers that are connected to a remote server computer for maintaining databases. In a preferred embodiment, where the processor 201 is a general purpose microprocessor, the data storage device 220 stores program 221 which includes instructions for controlling the processor 201. The processor 201 performs instructions of the program 221, and thereby operates in accordance with the present invention, and particularly in accordance with the methods described in detail herein. The program 221 may be stored in a compressed, uncompiled, and/or encrypted format. The program 221 further includes elements that may be necessary, such as an operating system, a database management system and "device drivers" for allowing the processor 201 to interface with computer peripheral devices. Appropriate device drivers and other necessary program elements are known to those skilled in the art, and need not be described in detail herein.

According to an embodiment of the present invention, the instructions of the program 221 may be read into a main memory from another computer-readable medium, such as from a ROM to RAM. Execution of sequences of the instructions in program 221 cause processor 201 to perform the process steps described herein. In alternative embodiments, hard-wired circuitry may be used in place of, or in combination with, software instructions for implementation of the processes of the present invention. Thus, embodiments of the present invention are not limited to any specific combination of hardware and software.

The term "computer-readable medium" as used herein refers to any medium that directly or indirectly participates in providing instructions to processor 201 for execution. Such a medium may take many forms, including but not limited to, non-volatile media, volatile media, and transmission media. Non-volatile media include, for example, optical or magnetic disks. Volatile media include dynamic random access memory (DRAM), which typically constitutes the main memory. Transmission media include coaxial cables, copper wire and fiber optics, including the wires that comprise a system bus coupled to the processor 201. Transmission media can also take the form of acoustic, electrical or electromagnetic waves, such as those generated during radio frequency (RF) and infrared (IR) data communications.

Some common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, a carrier wave such as electrical, electromagnetic or optical signals, or any other medium from which a computer can read.

Various forms of computer readable media may be involved in carrying one or more sequences of one or more instructions to the processor 201 for execution. The following example illustrates the transmission of computer-readable instructions via a plurality of media. The instructions may initially be stored on a magnetic disk of a remote computer. The remote computer can load the instructions into its dynamic memory and send the instructions over a telephone line using a modem. A modem local to a central controller can receive the instructions from the telephone line and use an infrared transmitter to convert the instructions into an infrared signal. An infrared detector can receive the instructions represented by the infrared signal and transmit the instructions across a system bus to processor 201. The system bus carries the instructions to a main memory, from which processor 201 retrieves and executes the instructions.

The instructions received by main memory may optionally be stored elsewhere before or after execution by processor 201.

The program 221 also includes instructions for managing the communication server 101, such as determining from profile data, those providers interested in providing capital to originators. In other words, the processor 201 is operable to load and run the program 221. In the embodiment of Fig. 2, the program 221 stores data accumulated, or computed by, the processor 201 on the data storage device 220. This stored data is preferably organized and indexed in one or more related relational databases 230, 240, 250, and 260. It will be appreciated that these databases may be organized as object oriented, relational, hierarchical file systems, database systems, or any suitable data organization scheme.

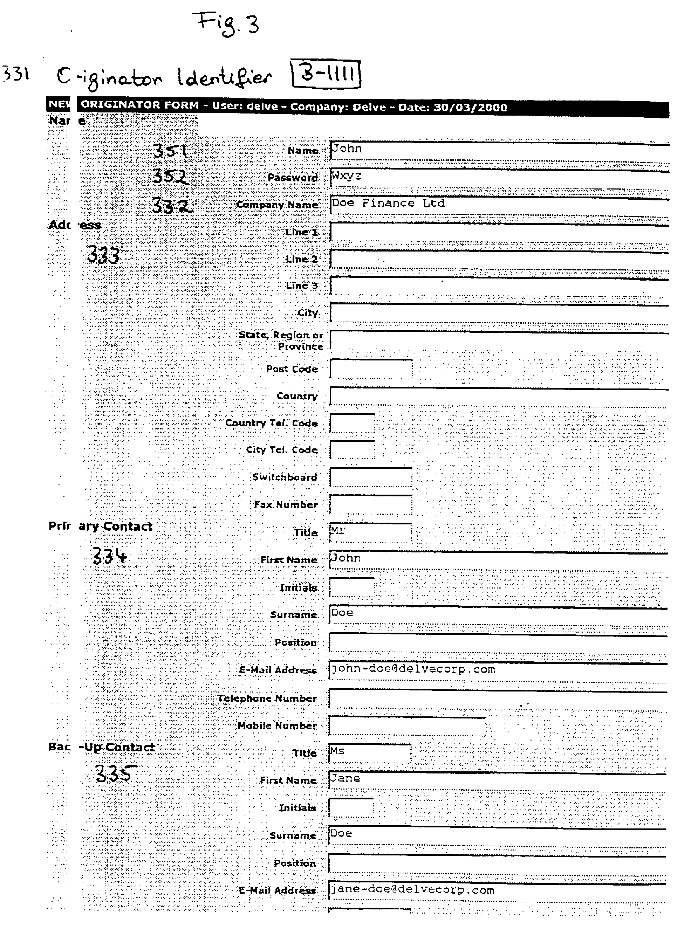

In the example embodiment illustrated in Fig. 2, the related relational databases include a originator database 230, a provider database 240, an inquiry database 250, and a response database 260, although these and/or other databases may be included. Each of the databases is explained in more detail with reference to Figs. 3-7. One of ordinary skill in the art would recognize that the database records illustrated in Figs. 3-7 are for illustrative purposes only, and that the databases 230, 240, 250, 260 could contain any number of records.

An exemplary originator record 300 from the originator database 230, is illustrated in Fig. 3. As shown, originator database maintains data on originators with fields 331-343, such as, an originator identifier field 331, an originator name field 332, an address field 333, a primary contact information field 334, a back-up contact information field 335, an information systems contact field 336, a company details field 337, a company/department activity field 338, a business sectors field 339, a transaction profile field 340, a transaction history field 341, a principal contact information field 342, and a blocked debt providers field 343. In an alternate embodiment, the originator database 230 also includes a login name field 344 and a password field 345. The information stored in this database 230 may be retrieved only by the originator and by the system 100.

Referring now to the originator identifier field 331, this field stores an identifier for each originator. Each originator identifier has an associated name stored in name field 332. For example, Doe Finance Ltd.'s originator identifier is B-1111. Address field 333 stores address and contact number information for the company identified in name field 332. Primary contact information field 334 stores the name, position, and contact information, such as, e-mail ("electronic mail") address, telephone and mobile numbers, for the primary contact. For example, the primary contact for Doe Finance Ltd. is Mr. John Doe, and his e-mail address is johndoe@doecorp.com. Back-up contact information field 335 stores information similar to that stored in primary contact field 334, for the back-up contact, for example, Ms. Jane Doe in the exemplary originator database 230.

Information systems contact field 336 stores a name, position, and contact information, such as e-mail address, telephone and mobile numbers. Such field 336 also stores information on versions of software used by the company. Company details field 337 stores a parent company name and a public credit rating. Company/department activity field 338 stores the type of activity in which the company or department engages. For example, as illustrated in the exemplary originator record 300, the company may be an arranger, an industry specialist, a broker, or something else. Business sectors field 339 stores the business sectors in which the company identified in field 332 is involved. The exemplary originator record 300 illustrated in Fig. 3, lists some of the business sectors, such as aviation, shipping, railways, vehicle, oil and gas, other natural resources, telecom, power, other utilities, infrastructure, and machinery. However, it will be appreciated that other business sectors may be added.

Transaction profile field 340 stores data indicating the typical types of transactions in which the company identified in name field 332 engages. For example, in the exemplary originator record 300, transaction profile field 340 stores a targeted number of financings per annum, which is a number of transactions Doe Finance Ltd. plans to complete each year, and an average deal size, which is the average amount of money involved in a transaction. In the exemplary originator record 300, Doe Finance Ltd. has targeted 6 transactions per year, where the average transaction involves $175 million US dollars.

Transaction history field 341 stores data regarding the originator's prior transactions. In one embodiment, this information is only accessible by the system 100. Neither the originators nor the providers have access to this transaction history information. From the exemplary originator record 300, it can be seen that the originator database 230 stores information such as, number of RFPs previously submitted; number of transactions completed; total volume financed, which is the aggregate value of funds generated and used by the originator through system 100, new capital found outside of preferred providers, which applies in the embodiment when the originator specifies preferred providers (not shown) and represents the total value of funds found outside the originator's list of preferred providers, total fees generated, which are the total fees the system 100 has received from transactions involving the originator; total fees invoiced, which are the total fees the originator has been invoiced; originator rating, which is a rating the system 100 gives the originator; transaction representative, which is the system 100 representative, if any, assigned to assist the originator with the transaction; date activated, which is the date the originator became an active member of system 100; by whom the originator was referred; and any notes the system 100 may have regarding the originator.

Principal field 342 stores a name, position, and contact information, such as telephone and mobile numbers, for principals of the originator company identified in name field 332. For example, referring to the originator record 300, it can be seen that Doe Finance Ltd. has two principals, Mr. Joe Doe and Ms. Jane Doe, each of whose name, position, and contact information is provided.

Blocked debt providers field 343 stores a company name and surname of each of the debt providers to whom the company identified in field 332 does not desire to send any RFPs. In an alternate embodiment, originator database 230 includes a preferred debt provider field (not shown) which stores a company name and surname of each of the debt providers with whom the company identified in field 332 desires to send RFPs. In such embodiment, preferred providers are ranked higher than other providers.

In an alternate embodiment, originator database 230 includes a login name field 351 and a password field 352, which store a login name and a password, respectively. In such embodiment, the login name and password must be entered in order to access a particular originator record in originator database 230. This restricts use of database records to only authorized users. For example, in originator record 300, Doe Finance Ltd.'s login name is john and its password is wxyz.

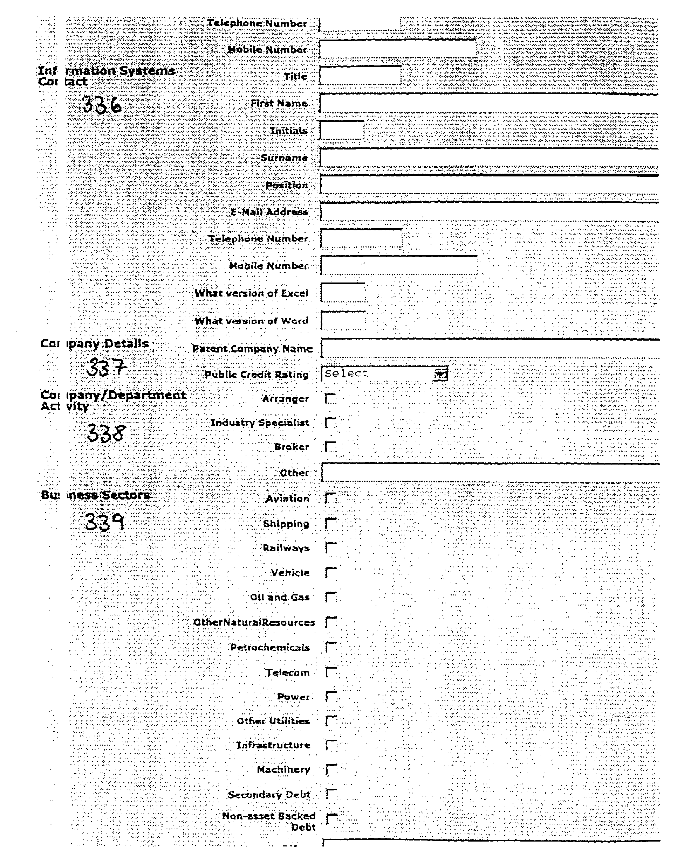

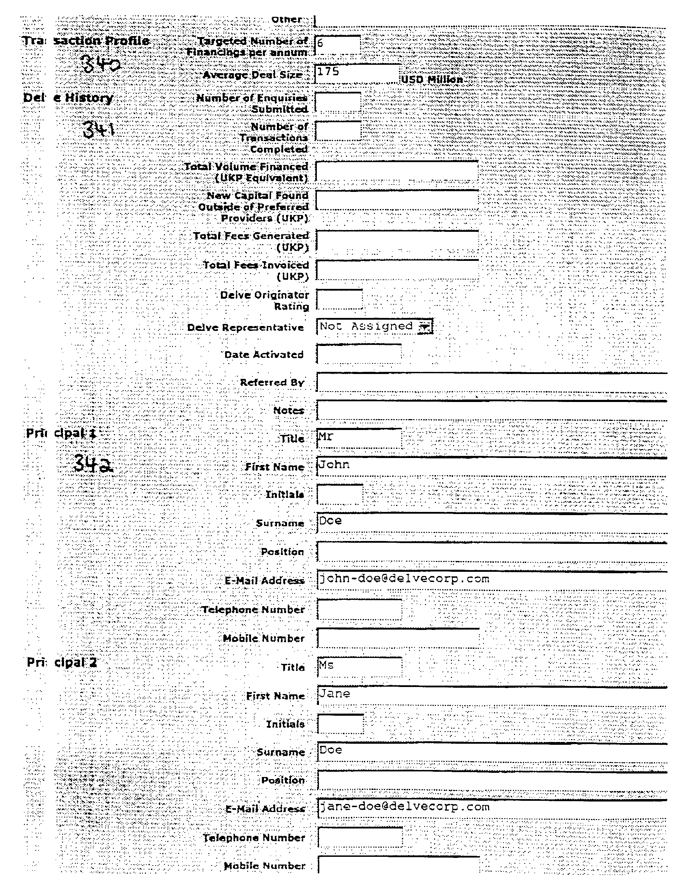

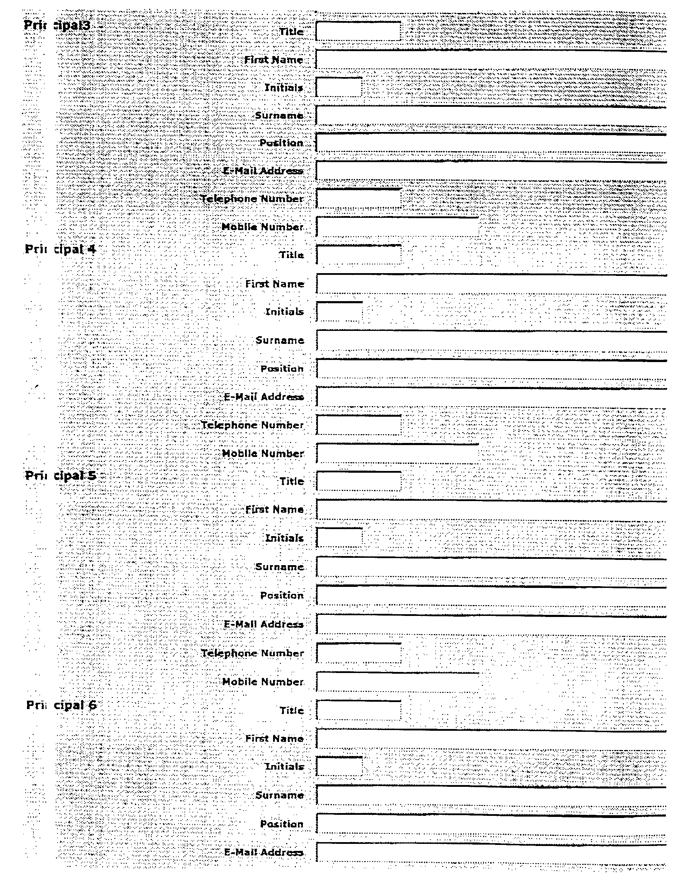

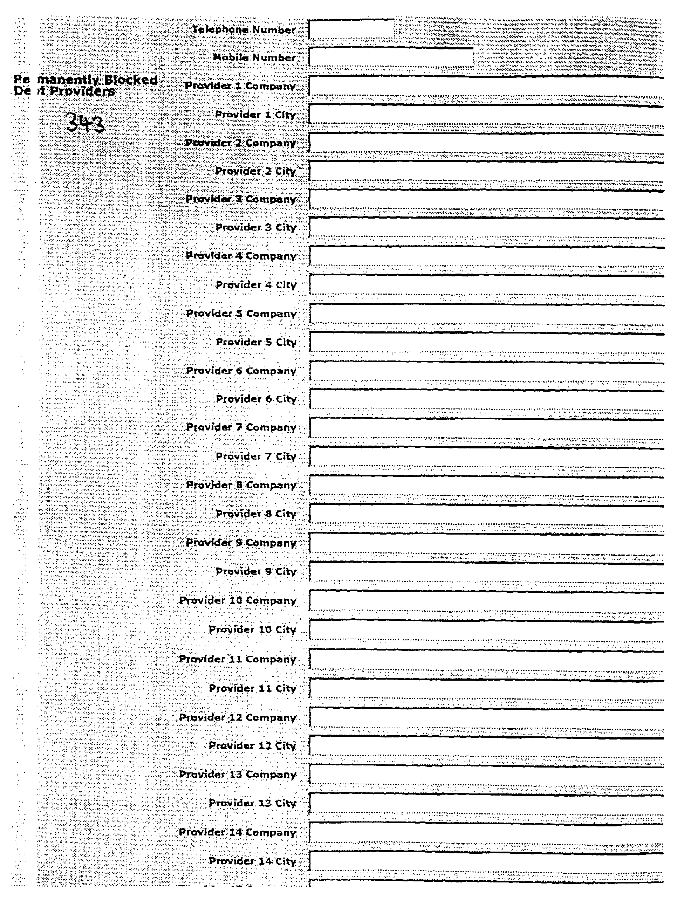

An exemplary provider record 400 from the provider database 240 is illustrated in Fig. 4. As shown, provider database maintains data on providers with fields 441-453, such as, a provider identifier field 441, a provider name field 442, an address field 443, a primary contact information field 444, a back-up contact information field 445, an information technology contact field 446, a company details field 447, a services provided field 448, a business sectors field 449, and a transaction preferences field 450. In an alternate embodiment, the provider database 240 also includes a login name field 451 and a password field 452 and a transaction history field 453.

Referring now to the provider identifier field 441, this field stores an identifier for each provider. Each provider identifier has an associated name stored in name field 442. For example, Smith Company, Ltd.'s provider identifier is L-1111. Address field 443 stores address and contact number information for the company identified in name field 442. Primary contact information field 444 stores the name, position, and contact information, such as, e-mail address and telephone and mobile numbers, for the primary contact. For example, the primary contact for Smith Company Ltd. is Mr. Alex Smith, and his e-mail address is asmith@smithco.com. Back-up contact information field 445 stores similar to that stored in primary contact field 444, for the back-up contact, for example, Mr. Brian Jones in the exemplary provider database 240.

Information technology contact field 446 stores a name, position, and contact information, such as e-mail address, telephone and mobile numbers. Such field 446 also stores information on versions of software used by the company. Company details field 447 stores a parent company name and a public credit rating. Services provided field 448 stores the type of services the provider company identified in field 442 provides. For example, in the exemplary provider record 400 illustrated in Fig. 4, it can be seen that Smith Company Ltd. provides corporate lending and may assume asset risk. However, Smith Company Ltd. may not originate transactions. Furthermore, it will be appreciated that other service sectors may apply.

Business sectors field 449 stores the business sectors for which the company identified in field 442 will provide funding or capital. The provider record 400, lists some of the business sectors, such as aviation, shipping, railways, vehicle, oil and gas, other natural resources, telecom, power, other utilities, infrastructure, and machinery. However, it will be appreciated that other business sectors may be added.

Transaction preferences field 450 stores criteria the company identified in field 442 prefers or requires in an originator's RFP before preparing a proposal. For example, in the provider record 400, transaction preferences field 450 stores information regarding targeted assets, if any, which are the types of assets which the provider targets as a basis for providing funding; a number of transactions per annum, which is the number of transactions in which the provider targets to complete per year; a preferred funding range, which is the monetary range within which the provider prefers to lend; a maximum term, which is the maximum term of a loan; a preferred average life, which is the preferred average life of a loan; and a maximum loan-to-value percentage, which is the maximum loan amount the provider will provide as a percentage of the value of any asset which may serve as security for the loan.

As illustrated in the exemplary provider record 400, Smith Company, Ltd. targets high value transportation assets as security for its loans, seeks to complete 12 transactions per annum, prefers to provide funding in the range of $50-300 million US dollars, has a maximum loan term of 84 months, prefers to provide loans having an average life of 5 years or less, and provides loan amounts up to a maximum of 85% of the value of any underlying asset/security (i.e., has a maximum loan-to-value ratio of 85).

The illustrated provider record 400 also stores a risk/reward preference, which may be: simple structure or asset/moderate credit risk/moderate return level; simple structure or asset/mid-to-high credit risk/mid-to-high return level; complex or new structure or asset/moderate credit risk/moderate-to-high return level; difficult structure, asset, credit, jurisdiction or other risk/high return level; or other, which would be specified by the provider. Provider record 400 also stores information related to preferred geographic locations, and information related to whether the provider will consider transactions outside the criteria specified. For example the provider Smith Company, Ltd. prefers to lend to businesses in Eastern Europe, and will consider transactions outside the criteria specified.

In an alternate embodiment, provider database 240 includes a login name field 451 and a password field 452, which store a login name and a password, respectively. In such embodiment, the login name and password must be entered in order to access a particular provider record in provider database 240. This restricts use of database records to only authorized users. For example, in provider record 400, Smith Company Ltd.'s login name is Alex and its password is abcd.

In yet another alternate embodiment, provider database includes a transaction history field 453 stores data regarding the provider's prior transactions. In one embodiment, this information is only accessible by the system 100. Neither the originators nor the providers have access to this transaction history information. From the exemplary provider record 400, it can be seen that the provider database 240 stores information such as, the number of RFPs submitted to providers; number of transactions completed; total volume financed, which is the aggregate value of all capital provided by this provider; total fees generated, which are the total fees the system 100 has received from transactions involving the provider; provider rating, which is a rating the system 100 gives the provider; transaction representative, which is the system 100 representative, if any, assigned to assist the provider with the transaction; date activated, which is the date this provider became an active member of the system 100; by whom the provider was referred; and any notes the system 100 may have regarding the provider.

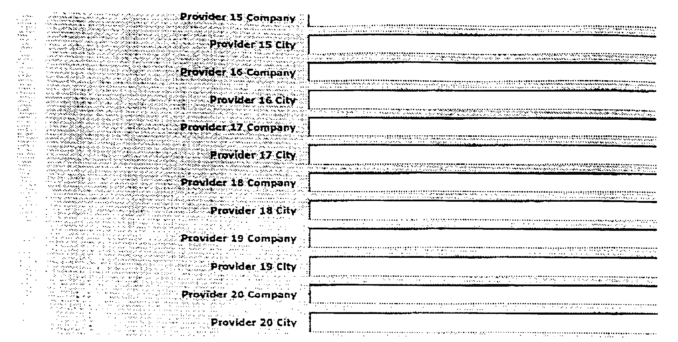

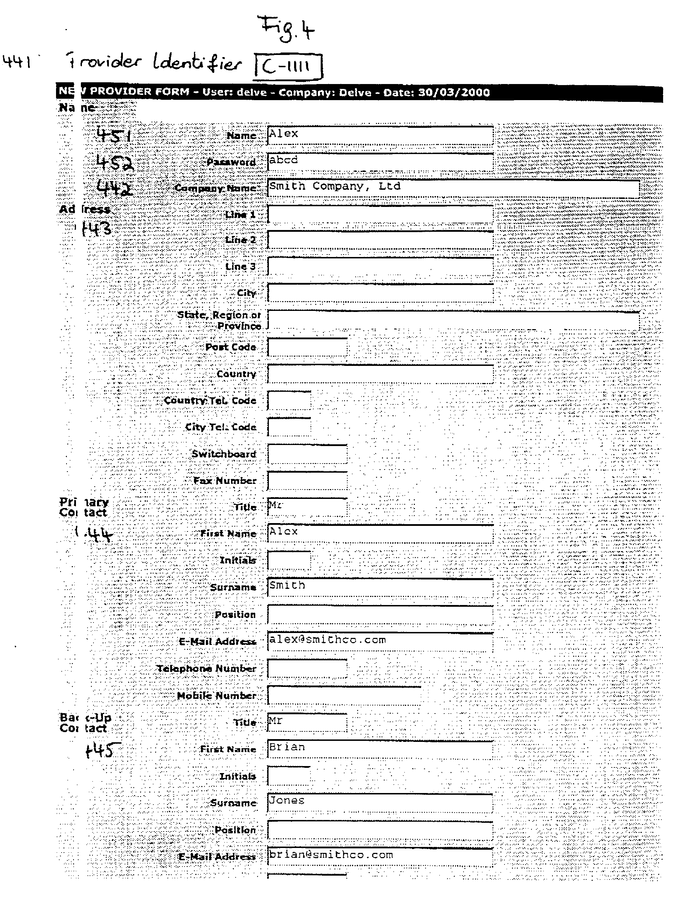

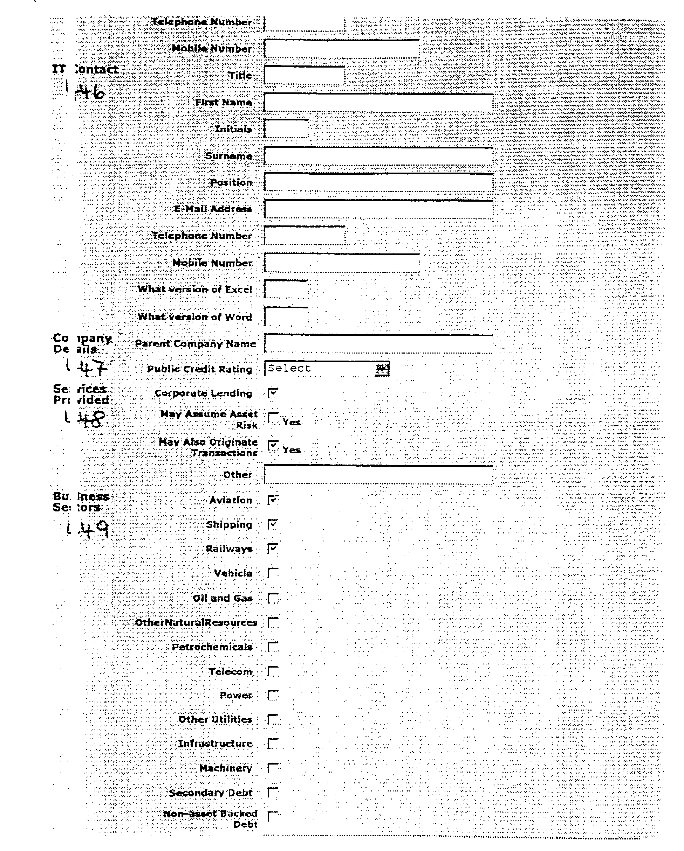

Referring now to Fig. 5, an inquiry record 500 from inquiry database 250 is illustrated. As can be seen from the record 500, inquiry database 250 maintains data on inquiries to the system 100 with fields 551-561, such as, an inquiry identifier field 551, an inquiry type field 552, a transaction field 553, an asset description field 554, an asset security field 555, a financing requested field 556, a credit field 557, a distribution field 558, a selection criteria field 559, an attachments field 560, and a status field 561.

The information stored in these fields 551-560 is provided to the system 100 by the originator seeking funding. The information indicates the type of asset, if any, with which the originator is proposing to secure loan funding, the type of loan terms the originator is seeking, the financing term, the originator's debt and credit information, the degree to which the system 100 should distribute the originator's RFP to providers, and the criteria the system 100 should use in ranking any received loan proposals.

Referring now to the inquiry identifier field 551, this field stores an identifier for each RFP. This enables the system 100 to keep track of inquiries coming from originators. For example, the inquiry identifier for the RFP in inquiry record 500 is 29. The inquiry field 552 stores an RFP type and a reply deadline. The originator may specify the RFP type from the options provided, such as, indicative or formal, or the user can input a different RFP type. The reply deadline is the last date on which the originator will accept a response to the RFP.

The transaction field 553 stores a project name, which is a name of a project to which the transaction is related; a project type, such as project financing, new asset financing, secondary debt non-asset backed, or asset refinancing; a proposed capital structure, which may be senior secured loan, single investor, lease financing or any other structure nominated by the originator; an expected closing date, which is an approximate date on which the originator expects to close and fund the financing; and a funding currency, which is the currency in which the originator would like to obtain financing.

Asset description field 554 stores information related to the description of the asset, if any, being offered as security for the requested loan or which is being offered for sale. In the exemplary inquiry record 500 illustrated, the asset description field 554 stores an industry with which the asset is affiliated, such as aviation, oil and gas, telecommunications or machinery; a type of asset or collateral, which is the item for which the originator is seeking funding; an asset use, which is for what the originator intends to use the asset; a net purchase price/current fair market value ("FMV"), which is the net purchase price or the current fair market value of the asset; a manufacturer/serial number of the asset; a date of manufacture of the asset; asset specifications, such as dimensions and weight; an appraiser, which is the name of the company or individual providing an appraisal as to the value of the asset; methodology, which is the basis upon which the appraisal has been prepared; a fair market value projection period, which is the period for which the appraisal applies; and a fair market value at each year end, which are the projected values for the asset on discrete dates during the projection period.

Asset security field 555 stores information related to security provided to the provider by the asset for which the originator is seeking funding. In the exemplary inquiry record 500, the asset security field 555 stores a geographic asset location, such as a zone, a country, or other location provided by the originator in which the asset is located; a provider security, which is the collateral the provider receives if the originator defaults on the loan, such as ownership of the asset or first priority lien over the asset.

Asset security field 555 also stores major events of default, which are the events triggering default. In the exemplary inquiry record 500, such major events of default are: payment default not cured within 5 days; covenant default continuing for more than 65 calendar days; material representation or warranty being incorrect and not cured within 65 calendar days; certain events of bankruptcy, re-organization or insolvency; failure to maintain insurance not cured within 10 calendar days; failure to maintain asset or correct maintenance deficiencies within 90 calendar days; and other events added by the originator. It will be appreciated that the major events of default illustrated are for exemplary purposes only and that all, some, or none of the illustrated major events of default or other major events of default, may be stored in asset security field 555.

Also stored in asset security field 555 are covenants. Some exemplary covenants are illustrated in inquiry record 500, such as, assets to be kept free and clear of all liens, assets to be maintained in keeping with industry standards, casualty and loss insurance to be provided by an approved insurer, and other covenants added by the originator . It will be appreciated that the covenants illustrated are for exemplary purposes only and that all, some, or none of the illustrated covenants or other covenants, may be stored in asset security field 555. Asset security field 555 also stores an applicable law, such as German or English, governing the transaction.

Debt summary field 556 stores information related to the debt sought by the originator. In the exemplary inquiry record 500, the debt summary field 556 stores total financing requested, which is the total loan amount of debt sought by the originator; draw downs, which identify an amount of money the originator intends to draw from the loan on a particular date; a final payment balloon, which is a lump sum to be repaid at the end of the financing; a financing term, which is the length of time for the loan; a payment periodicity, which is the frequency with which the originator will make payments on the debt. Debt summary field also includes payment in arrears/advance information, which is the basis upon which interest should be calculated. If the originator is making periodic payments in advance, the first payment is at the beginning of the payment term. If payments are made in arrears, the first payment is at the end of the first term. Debt summary field further includes a first financing service date, which is the date of the first interest and/or principal payment to the provider; number of financing service payments, which is the number of payments the originator will make over the course of the debt term; a financing repayment profile, which is the manner in which the debt will be repaid, such as constant periodic payments or lump sum at the end of the term; an estimated average life, which is the average duration of the loan; a money cost benchmark, which is the applicable index for the underlying cost of capital, such as 90 day LIBOR or one year U.S. Treasury Bonds, and a benchmark rate, which is the actual cost of capital assumed for the proposal.

Also included in inquiry database 250 is a credit field 557 which stores information related to the borrower's credit. In order to conform to confidentiality requirements, some of this information, such as the beneficiary/credit name, can be withheld until interested providers have responded to the originator's RFP. In the exemplary inquiry record 500, credit field 557 stores a beneficiary/credit name, which is the name of the beneficiary of the debt; an address of the beneficiary; an applicable credit rating, which is the beneficiary's public rating as assigned by Moody's or Standard and Poor; a legal status, which is the legal status of the beneficiary, such as, public or private corporation; business areas, which are the areas in which the beneficiary conducts business; auditors, which are the names of companies which audit the beneficiary; major shareholders, which are the names of the major shareholders of the beneficiary; parent company, which is the name of the parent company, if any, of the beneficiary; a public share symbol, which is the trading symbol, if any, of the beneficiary company; and an exchange listing, which is the name of the stock exchange, if any, on which the beneficiary is publicly traded.

Credit field 557 also stores total assets, which is an approximate total monetary value of the beneficiary's assets; shareholder equity, which is an approximate monetary value of the beneficiary held by the shareholders; any other information provided by the originator; and an indication as to whether the borrower, the borrower's agent, and/or the borrower's arranger desire to keep their names confidential. If a borrower desires to keep its name confidential, the system 100 withholds the borrower's name from the RFP until a provider responds to the borrower's RFP and the borrower agrees to release its name. Distribution field 558 stores information related to the scope of distribution of the originator's RFP to providers. In the exemplary inquiry record 500, distribution field 558 stores the originator's estimated risk/reward profile for the RFP which may be simple structure or asset/moderate credit risk/moderate return level; simple structure or asset/mid-to-high credit risk/mid-to-high return level; complex or new structure or asset/moderate credit risk/moderate-to-high return level; difficult structure, asset, credit, jurisdiction or other risk/high return level; or other, which would be specified by the originator.

Distribution field 558 also allows the originator to specify the scope of distribution, for example, as illustrated in inquiry record 500, the originator can specify unrestricted broadest possible distribution; or only to selected lenders/providers the names of which would be provided or selected from a menu of lenders by the originator; a list of lenders/providers to be excluded from the distribution list, the names of which would be provided by the originator; or only to providers in particular locations which would be provided by the originator; and/or a list of providers in particular locations to be excluded from the distribution list, the names of which would be provided by the originator. Distribution field 558 also stores a minimum credit rating, which is the lowest lender credit rating acceptable to the originator; and allows the originator to specify whether the originator's name may be revealed to the provider.

Selection field 559 stores how the user desires the system 100 to sort the responses to the originator's RFP. The originator can elect to have the system 100 sort the responses based on the lowest "all in" cost of financing, the size of loan offered, the fewest negotiating parties, the fewest covenant requirements, or any other criteria specified by the originator.

Attachments field 560 stores any attachments that may be provided by the originator and/or required by a lender to evaluate the RFP or complete a transaction.

Status field 561 stores a status of the RFP identified in inquiry identifier field 551. In the exemplary embodiment illustrated, the status of the RFP may be draft, submitted, approved, pending, answered, awarded, funded, withdrawn or lapsed. A draft status indicates that an originator is preparing a RFP but is not ready to submit it to the market yet. A submitted status indicates that a RFP from an originator has been received by the communication server 101 for distribution to the market. An approved status indicates that the RFP has been converted into e-mail form and approved by the originator for distribution. The originator may not know which providers will receive the RFP, but when preparing the RFP, the originator may exclude certain providers and include other providers as desired.

A pending status indicates that the system 100 has selected a group of providers from an available pool of providers, to whom the inquiry should be distributed, and has sent the RFP to those selected providers.

An answered status indicates that the system 100 has received a response to the RFP from one or more providers and has transmitted a summary of the response to the originator. An awarded status indicates that a proposal from one of the providers has been accepted by the originator. A "funded" status indicates that the transaction has closed, and an originator may be invoiced for the "success" fee. A withdrawn status indicates that an originator has canceled a RFP after having approved it. A lapsed status indicates that the system 100 has received no response to the RFP before the reply deadline stored in reply deadline field 552.

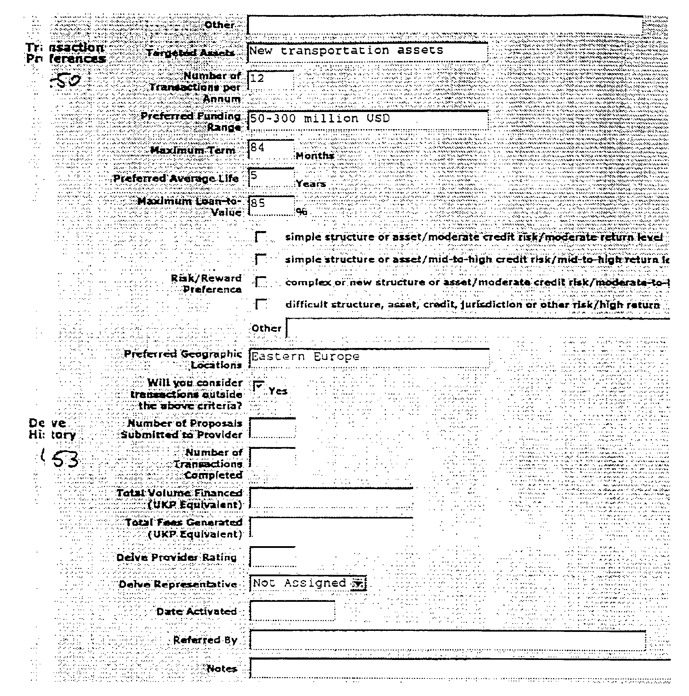

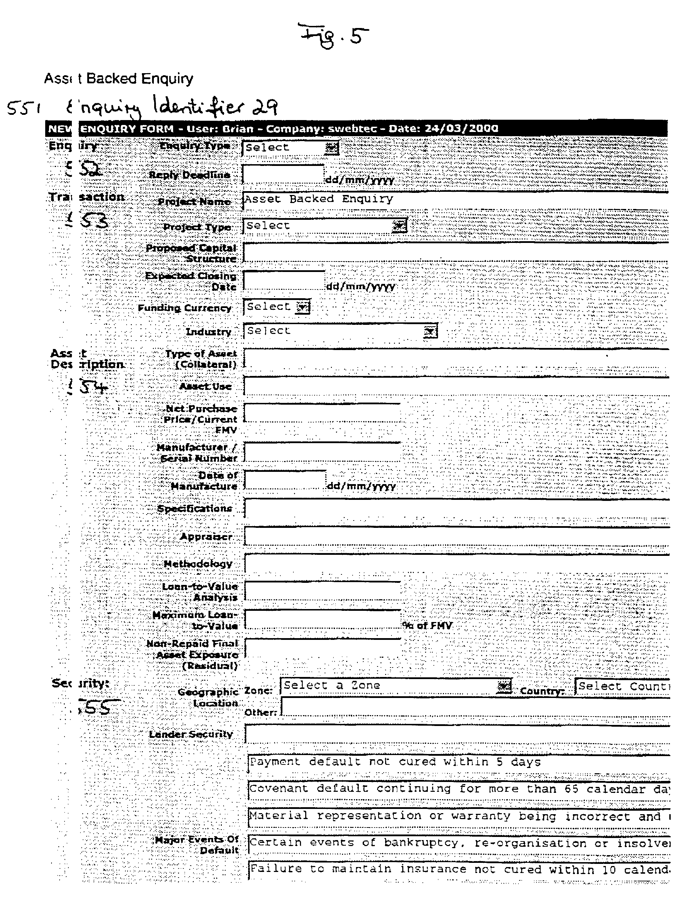

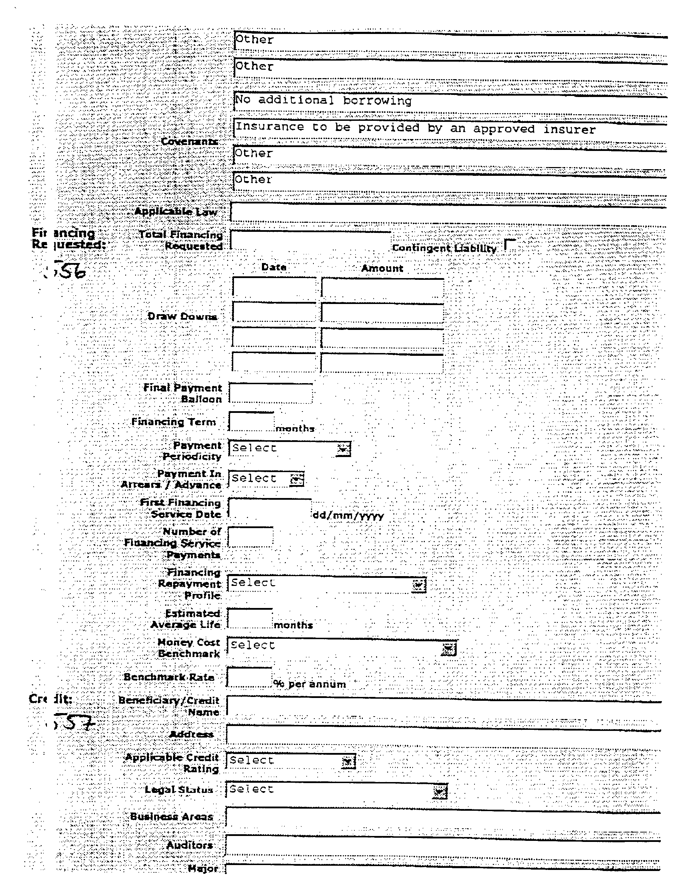

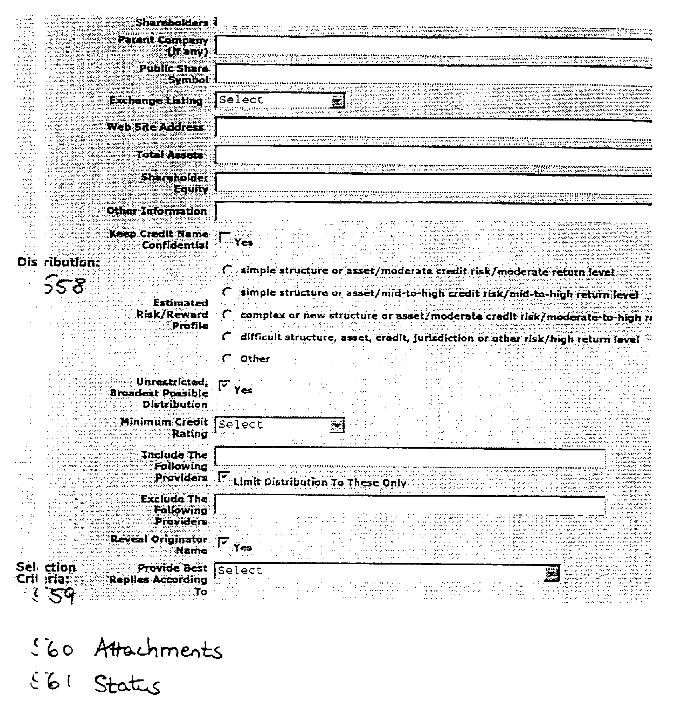

Once the originator has supplied information into the inquiry database 250, an inquiry report 600 such as that illustrated in Fig. 6 is generated by system 100. Inquiry report 600 sets forth the originator information in the form in which it is supplied to providers in fields, such as transaction summary field 661, asset and asset security description field 662, and credit field 663.

In an alternate embodiment (not shown), the system 100 calculates and adds a credit and corresponding capital adequacy weighting to the RFP to assist the providers with their evaluation of the transaction. The credit rating is a proprietary calculation by the system 100 which calculates the relative risk of the RFP compared with other RFP's based on data stored within the inquiry database 250. The capital adequacy weighting is a calculation by the system 100 using data in the inquiry database 250 of the reserve capital the regulatory authorities will require any banking provider to set aside as a reserve for the loan envisaged by the RFP.

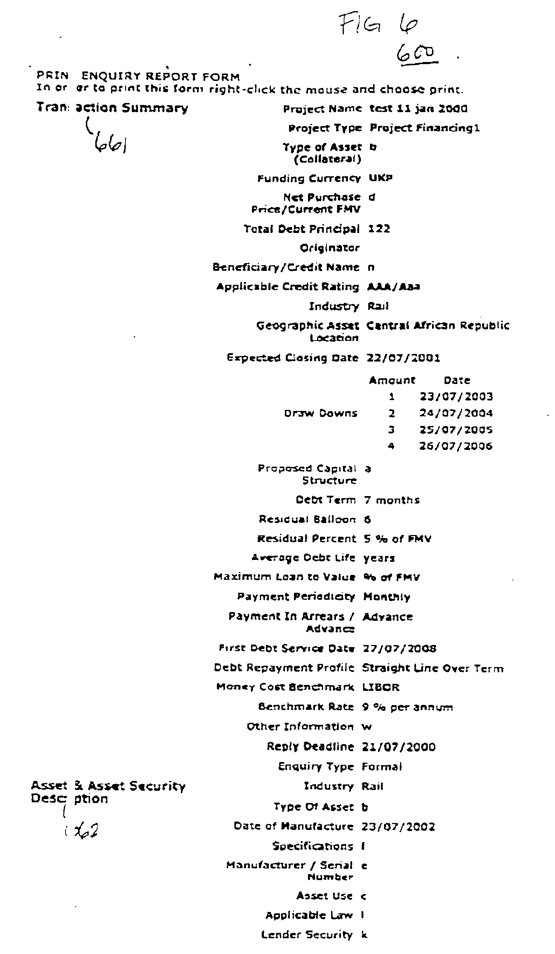

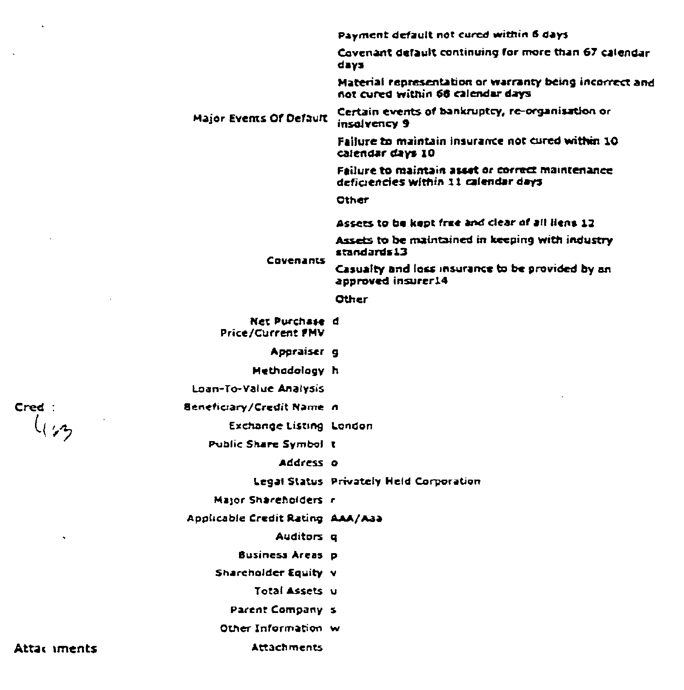

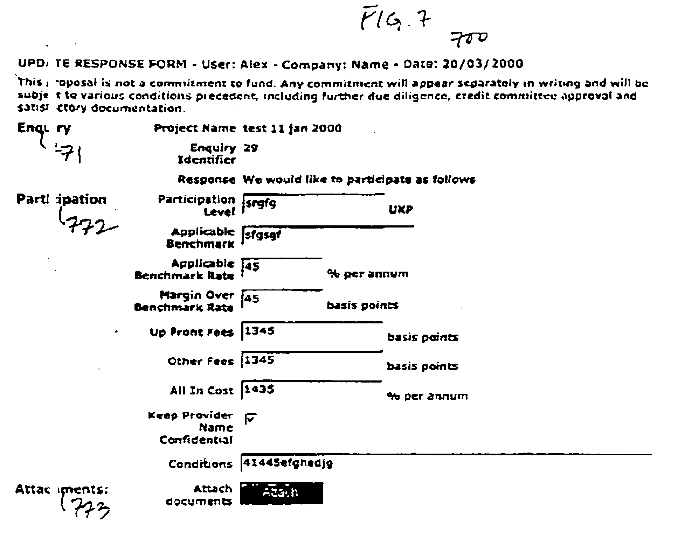

Response database 260 stores provider responses to originator inquiries. An exemplary response record 700 from response database 260 is illustrated in Fig. 7. As shown, response database maintains data on provider responses with fields 771-773, such as inquiry field 771, participation field 772, and attachment field 773.

Referring now to inquiry field 771, this field stores a project name specified in the originator's RFP and an inquiry identifier corresponding to the project name. For example, response record 700 is in response to inquiry 29 corresponding to the project named "test." Inquiry field 771 also stores the provider's response to the originator's RFP. For example, in the exemplary response record 700, the provider has indicated that they would like to participate as set forth in participation field 772.

Since the provider may provide all or partial funding, participation field 772 stores the manner in which the provider desires to participate in the transaction. In the exemplary response record 700, participation field 772 stores a participation level, which is the amount of capital a provider is prepared to provide; an applicable benchmark, which is the underlying cost of capital assumption, such as 90 day LIBOR or one year U.S. Treasury Bonds; an applicable benchmark rate, which is the assumed cost of capital at closing; a margin over benchmark rate, which is risk premium demanded by the provider; up front fees, which fees the originator must pay up front, such as 100 basis points on the loan amount; other fees the originator must pay, such as 50 basis points per annum on any undrawn funds; and all in cost, which is the combined cost of capital, risk premium, and any fees payable by the originator. The participation field 772 also stores whether the provider desires to keep its name confidential. If the provider does intend to keep its name confidential, the system 100 keeps the provider's name confidential until the originator selects the provider as a source of funding. The provider can also include conditions under which the provider desires to participate in the transaction. Such information is also stored in participation field 772.

Attachments field 773 stores any attachments provided by the provider in support of its response to the originator's RFP. These may consist of detailed conditions and qualifications such as the proposal being subject to credit committee approval, due diligence and satisfaction documentation.

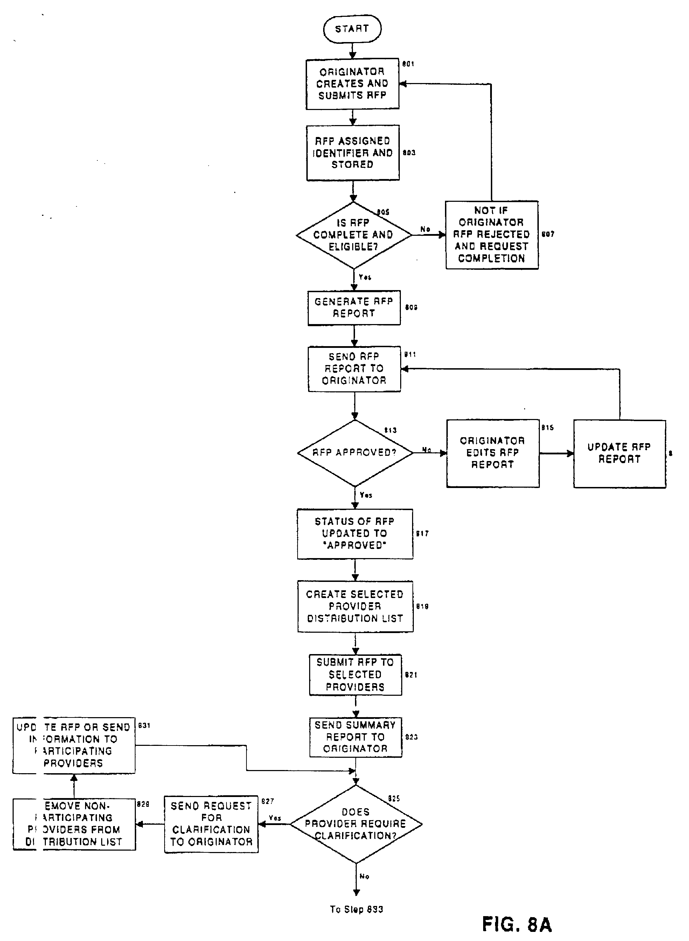

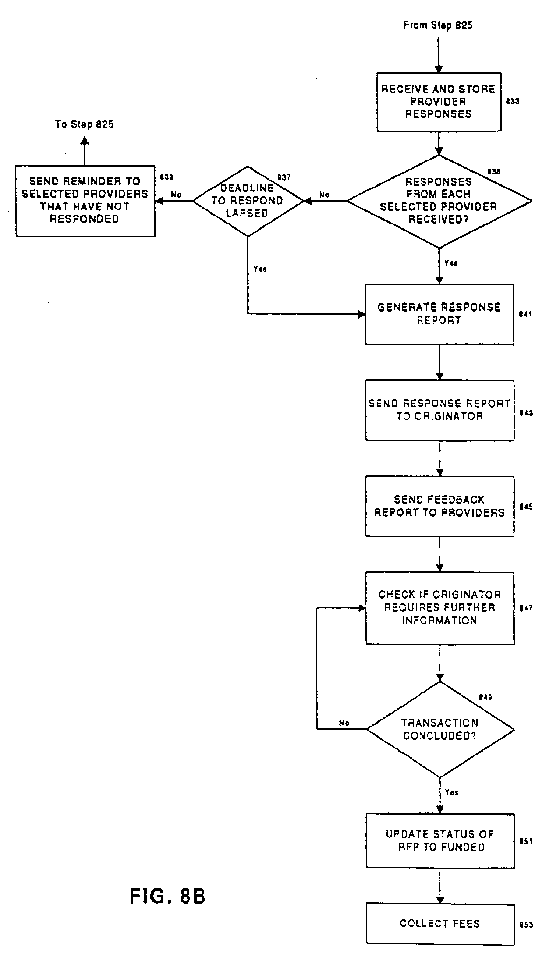

The operation of the system 100 is best explained with reference to the flowchart illustrated in Figs. 8A-8B. At step 801, communication server 101 receives a request for a proposal ("RFP") sent from a borrower/originator. In one embodiment, the originator inputs the data into an electronic RFP form, such as that illustrated in Fig. 3, to generate the request. The originator can edit and attach files to the RFP prior to submitting the form to the system 100. In an exemplary embodiment, the originator can save the RFP on the system 100 prior to submitting it. In such embodiment, the status of the RFP is indicated as "draft" in the status field 561 of inquiry database 250. When the originator has entered the necessary data, the originator submits the RFP.

In one embodiment, the data is sent to the communication server 101 via a website and the Internet. In this embodiment, the system 100 converts the machine readable information the originator has input to the website, into e-mail messages for distribution to the originator and to providers selected by the system 100 from its database. Thus, the system 100 is proactive, in that when an originator submits a request for proposal, the communication server 101 sends the request by e-mail directly to those providers who have already indicated that they are interested in such transactions types. Such proactive operation, avoids requiring providers to log on to the website of the system 100 to check if any requests for proposals (RFPs) have been submitted in which the provider might be interested. However, it will be appreciated that the providers are also able to log on to the system 100 to check for RFPs which have been distributed to them, or to modify their existing profile, as they wish.

At step 803, when the originator's RFP is received by the system 100, the RFP is assigned an identifier and is stored in inquiry database 250. The status of the RFP is indicated as "submitted."

At step 805, the system 100 reviews and determines whether the RFP is complete and eligible for processing. If the RFP is not complete and eligible for processing, at step 807, the system 100 notifies the originator that the RFP has been rejected in its current form and requests that the originator complete the RFP. The process then returns to step 801 where the process begins again with the originator submitting the revised RFP to the system 100. If the RFP is complete and eligible for distribution it is converted into an RFP report, at step 809, such as that illustrated in Fig. 6, and sent to the originator as an e-mail message for approval to distribute, at step 811.

At step 813, it is determined whether the originator has approved the RFP report. If the originator does not approve the RFP report, at step 815 the originator edits the RFP report and returns it to the system 100. At step 816, the system 100 updates the RFP report and the process returns to step 811. If at step 813 it is determined that the originator approves the RFP report, the system changes the status of the RFP to "approved," at step 817.

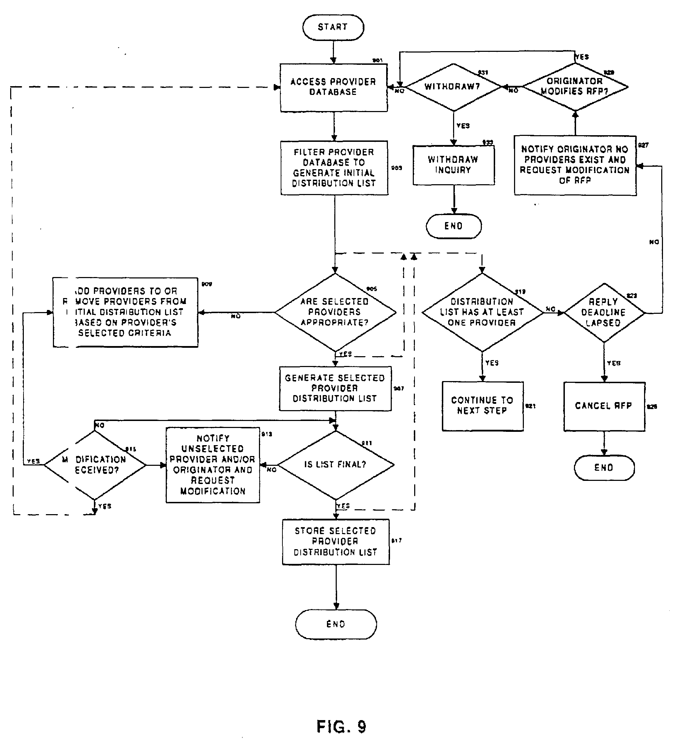

When the RFP is approved, the system 100 creates a provider distribution list at step 819. In a preferred embodiment, the originator does not see this distribution list. However, in an alternate embodiment, the originator receives the list. The process of creating a provider distribution list is explained with reference to the flowchart illustrated in Fig. 9. At step 901, the communication server 101 accesses the provider database 240.

At step 903, one or more filters are applied to the provider database 240 to generate an initial distribution list. The filters are applied to one or more fields, such as fields 441-452, of provider database 240 to identify data matching primary criteria specified by either the originator or by the system 100. Providers having the data matching the primary criteria are put on the initial distribution list. In one embodiment, a filter is applied to business sector field 449 of provider database 240 to select providers willing to provide funding or capital for business sectors matching the business sector in which the originator desires funding. For example, if the originator's RFP falls within the shipping sector, only those providers that have indicated an interest in the shipping sector will be considered to receive the originator's RFP. It will be appreciated that filters may be applied to other fields as well, including fields within the transaction preferences field 450, such as geographic location.

At step 905, once the initial distribution list has been generated, the system 100 determines whether the selected providers are appropriate. At this step the system 100 checks to ensure the selected providers have preferred or other approved criteria which matches, or does not conflict with, the criteria specified in the originator's RFP. If the selected providers are appropriate, the process continues to step 907. However, if one or more of the selected providers not appropriate, the providers are removed from the initial distribution list at step 909. In addition, if one or more providers have not been included by the system on the initial distribution list but remain relevant, these providers are added at step 909.

In determining whether the selected providers are appropriate, communication server 101 reviews data stored in transaction preferences field 450 of provider database 240 to determine whether each selected provider's transaction preferences match those specified by the originator. If the preferences match, the selected provider is appropriate and the process continues to step 907.

If a provider's preferred or other approved criteria does not match, or conflicts with criteria specified by the originator in the RFP, the provider may still be selected. If the provider has indicated that it will consider transactions outside the criteria specified in transaction preferences field 450, the communication server 101 keeps the selected provider on the initial distribution list, and the process continues to step 907. However, if the provider has indicated that it will not consider transactions outside the criteria specified in transaction preferences field 450, the communication server 101 removes the selected provider from the initial distribution list, at step 909.

Also, the originator may have specified in the RFP the names or types of particular providers to whom the RFP should not be sent. If any of these providers are on the initial distribution list, they are removed from the list at step 909. Similarly, the providers may specify the names or types of originators from whom they do not want to receive an RFP. If the originator in the present transaction is any of these specified originators, the provider is removed from the initial distribution list at step 909.

Consider the example where a filter has been applied to the business sector field 449 of provider database 240, and three providers have been selected. Even though these providers may all have an interest in the same business sector, one provider's preferred criteria may be risk/reward whereas another provider's preferred criteria may be a geographic location, whereas yet another provider's preferred criteria may be a financing type, such as asset-backed. In one embodiment, only when the criteria specified in the originator's RFP matches the provider's preferred criteria will the selected provider remain on the initial distribution list. In an alternate embodiment, providers who have indicated that they will consider transactions outside the criteria specified in transaction preferences field 450, will also remain on the initial distribution list.

At step 907, a selected provider distribution list is generated. An alternate embodiment of the present invention includes steps 911, 913, and 915. At step 911, the system 100 determines whether the selected provider distribution list is final. In such embodiment, criteria specified by providers not included on the selected provider distribution list ("unselected providers") are reviewed to determine what suggested modifications to their criteria, if any, may be made so that the provider may be included on the selected provider distribution list. Consider the example where an unselected provider has indicated a willingness to provide a maximum funding of$50 million dollars, but the originator is seeking $50,050,000. The system 100 may notify the unselected provider that a request for proposal is available for review if a modification to the maximum funding the provider is willing to provide is increased by $50,000. In one embodiment, the system 100 makes recommendations when criteria other than the filtering criteria may be modified to make a match. In another embodiment, the system 100 makes recommendations when criteria in the provider database, other than the criteria to be modified, matches the criteria sought by the originator in the request for proposal. In still another embodiment, the system 100 makes recommendations when the modifications to the provider's criteria would be insubstantial compared to the transaction as a whole.

In an alternate embodiment of the present invention, the criteria specified by the originator is also reviewed and compared with the criteria specified by unselected providers to determine what suggested modifications to the originator's criteria, if any, may be made so that the provider may be included on the selected provider distribution list. If the distribution list is final or if no modifications are suggested, the process continues to step 917.

However, if the provider's criteria may be modified, the system 100 notifies the provider of a pending transaction for which the provider may be considered if the provider's criteria were modified, at step 913. In an alternate embodiment, if the originator's criteria may be modified, the system 100 also notifies the originator at step 913 that another provider may be considered if the originator's criteria were modified. In one embodiment, the system 100 may even suggest modifications to the provider's and/or originator's criteria to enable the provider to be added to the selected provider distribution list. In another embodiment, the system 100 gives the provider and/or the originator a predetermined time in which to modify their respective criteria pursuant to the modifications suggested by system 100.

If modified criteria is received at step 915, the process returns to step 909 where the provider is added to the distribution list. Alternatively, the process may return to step 901 where the provider database 240 is accessed. If no modified criteria are received at step 915, the process returns to step 911.

Once the selected distribution list is generated, the process proceeds to step 917 at which the list of providers is stored in inquiry database 250, and the status of the RFP is updated to "pending" in status field 561 of inquiry database 250.

An alternate embodiment of the present invention includes steps 919, 921, 923, and 925. Throughout the process, the system 100 checks at step 919 to determine whether the distribution list includes at least a one provider. If the distribution list includes at least one provider, at step 921, the process continues to the next step. However, if the distribution list does not include at least one provider, it is determined at step 923 whether the deadline to respond to the originator's RFP has lapsed. If the deadline to respond to the originator's RFP has lapsed, the process goes to step 925 and the RFP is canceled. The status of the RFP is updated to "lapsed" in status field 561 of inquiry database 250.

If the deadline to respond to the originator's RFP has not lapsed, the process goes to 927. At this step, the system 100 notifies the originator that based on the originator's criteria, the system 100 has been unable to select a provider to whom to distribute the originator's RFP and asks whether the originator desires to modify the RFP. Then at step 929, the communication server determines whether the originator has modified the RFP. If the originator has modified the RFP, the process returns to step 901 and the provider database 240 is accessed. If the originator has not modified the RFP, the communication server determines whether the originator wants to withdraw the RFP, at step 931. If the originator wants to withdraw the RFP, the status of the RFP is updated to "withdrawn" in status field 561 of inquiry database 250, and the process ends at step 933. If the originator does not want to withdraw the RFP, the process returns to step 901.

Referring again to the process flowchart illustrated in Figs. 8A-8B, after the provider distribution list is created at step 819, system 100 sends the RFP and any attachments to the selected providers on the distribution list at step 821. In one embodiment, the RFP and attachments are sent to the selected providers via e-mail. The providers are not required to logon to a website to determine whether they have received an RFP. At this stage all communications between providers and originator take place through the system 100. Consequently, the parties are unknown to one another unless the originator has chosen to reveal its name. The e-mail messages are all addressed either to or from the system 100, which then forwards the e-mail message to the proper recipient. The system 100 uses the transaction identifier and project name to keep track of and attribute the e-mail messages between providers and originators related to a particular transaction.

An alternate embodiment of the present system includes step 823, at which the system 100 sends a summary report, which provides summary distribution statistics, to the originator who has sent the RFP.

Yet another alternate embodiment of the present invention includes steps 825, 827, 829, and 831. At step 825, the system 100 receives requests via e-mail for clarification of the originator's RFP from the contacted providers. At step 827 the communication server 101 sends these requests for further information to the originator. At step 829, the system 100 removes non-participating providers from the selected provider distribution list. For example, a provider may have already responded to the originator's RFP or have indicated that it does not want to participate in the current transaction. Thus, the system 100 removes these providers from the current selected provider distribution list. At step 831, the originator either updates the RFP to provide the clarifying information or sends the clarifying information to the communication server 101 which then forwards the clarification to the provider having requested clarification, and, if so instructed by the originator, to all other providers on the current selected distribution list.

Referring again to step 825, if none of the selected providers require clarification of the originator's RFP, the communication server 101 proceeds to step 833. At this step, provider responses to the originator's RFP are received and stored in response database 260.

At step 835, the communication server 101 determines whether responses from each of the selected providers have been received. The responses may include proposals or "not interested" comments by the selected providers. If all responses have not been received from the selected providers, it is determined at step 837 whether the deadline to respond has lapsed. If the deadline for responses to the originator's RFP has not lapsed, at step 839, the communication server 101 sends a reminder to those selected providers who have not responded and returns to step 825. If responses have been received from each of the selected providers or the deadline for responses has lapsed, the process continues to step 841.

At step 841, system 100 generates a response report summary of all proposals received, based on each provider's response to the originator's RFP. An exemplary provider response 700 is illustrated in Fig. 7. As illustrated, the exemplary provider response 700 includes the project name, RFP identifier, provider response, provider participation level, provider rates, provider fees, provider conditions, and any related attachments. In one embodiment, the process includes an additional step in which the responses as illustrated in Fig. 7 are ranked according to the originator's expressed preference in the RFP, such as, lowest all in cost funds. This ranking enables originators to limit their evaluation and detailed negotiations to the most motivated providers. Thus, the originators, not the providers, ultimately decide whether there is a match of the originator seeking funding and a provider providing funding, and which loan product is the best. Given the complexity and diversity of the loan products in the commercial lending (business-to-business) marketplace, the system 100 and process are effective and efficient mechanisms for communicating and filtering information to facilitate suitable confidentiality, specific communication of complex risks, loan customization, and corresponding originator evaluation/selection. In this case, the summary response report lists the top responses, such as the top 3-5 responses, at the same level of detail as in participation field 772 of Fig. 7. If the provider has not withheld its name, the applicable provider's name is also included in each of these top 3-5 responses. All remaining responses are presented in an aggregate and summary form.

At step 843, the system 100 sends the response report to the originator, and at step 843, updates the status of the RFP to "answered" in the status field 561 of inquiry database 250. At this time the originator may review the response reports to select one or more providers to complete the transaction. If necessary, the originator may contact the providers directly or simply request details on proposals which have been included in the aggregated information on the weaker proposals, before awarding a mandate. It is only after the mandate is awarded that a formal credit application is prepared and processed by the mandated provider(s).

Alternate embodiments of the present invention include steps 845, 847, and 849. At step 845, the system 100 sends feedback reports to the providers. While providers may not receive direct information about their competitors, or the results of a particular request for proposal process, those providers who have submitted proposals will receive limited feedback from the system 100, provided this feedback is possible without compromising the confidentiality of any originator or provider. Such feedback may take the form of an e-mail message confirming that a mandate for an identified RFP has been awarded. The feedback may also provide some of the terms of one or more proposals, such as the next to best proposal. Such feedback enables the providers to gauge what the current market price level is for the particular item requiring funding.

At step 847, the system 100 checks with the originator to determine whether the originator requires further information. If no further information is required, the process continues to step 849. At step 849, the system 100 determines whether the transaction has been concluded. In one embodiment the provider and/or originator notifies the system 100 that the transaction has been concluded. In an alternate embodiment, the system 100 monitors the communication between the provider and originator to determine when the transaction has been concluded. When it has been determined that the transaction has been concluded, at step 851 the status of the RFP is updated to "funded" in status field 561 of inquiry database 250. At step 853, the system 100 collects fees if the transaction has been funded.

It will be appreciated that while the RFP is pending, originators can modify the RFP to reflect their changing funding needs. In addition, the providers can modify their preferred transaction criteria to reflect their current financing interests. Also, given the complexity and information intensive nature of these RFPs, it can be helpful for an originator to "update" a previously completed RFP which contains information analogous to the originator's current requirements. Accordingly, the system 100 permits originators to retrieve prior RFP's for modification and submission as a new RFP.

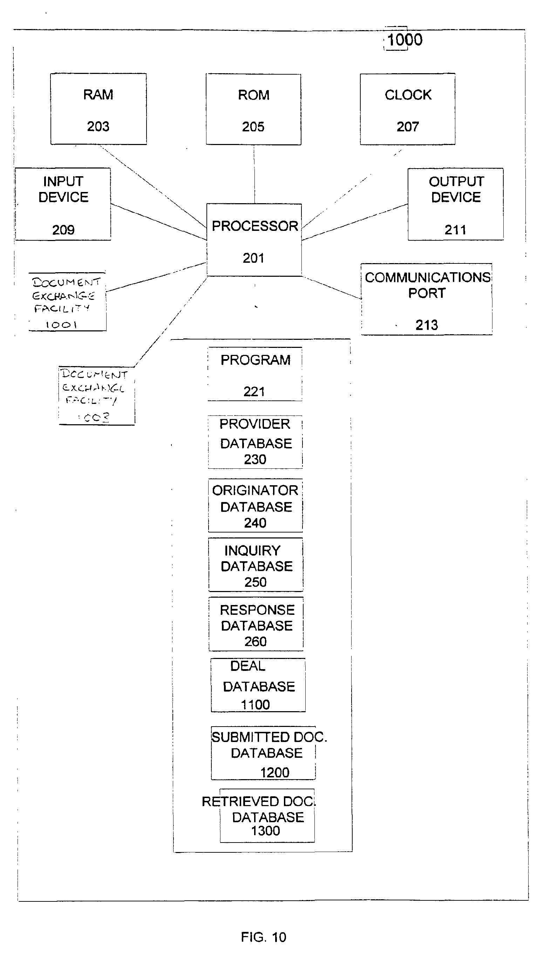

Fig. 10 illustrates an alternate embodiment of the present invention in which a system 1000 also includes a document exchange facility which allows the counter-parties to a transaction to manage the documentation phase of a deal. The counter-parties may include an originator, an administrator, and one or more group members, such as providers, lawyers and accountants. As illustrated in Fig. 10, the system 1000, according to the present invention includes a communication server 1001 in communication with one or more originator terminals 1003 (one is shown in Fig. 10 for illustrative purposes only, more originator terminals can be supported), one or more group member terminals 1005, 1009 (two are shown in Fig. 10 for illustrative purposes only, more or fewer group member terminals can be supported), and one administrator terminal 1007 (one is shown in Fig. 10 for illustrative purposes only, more or fewer administrator terminals can be supported).

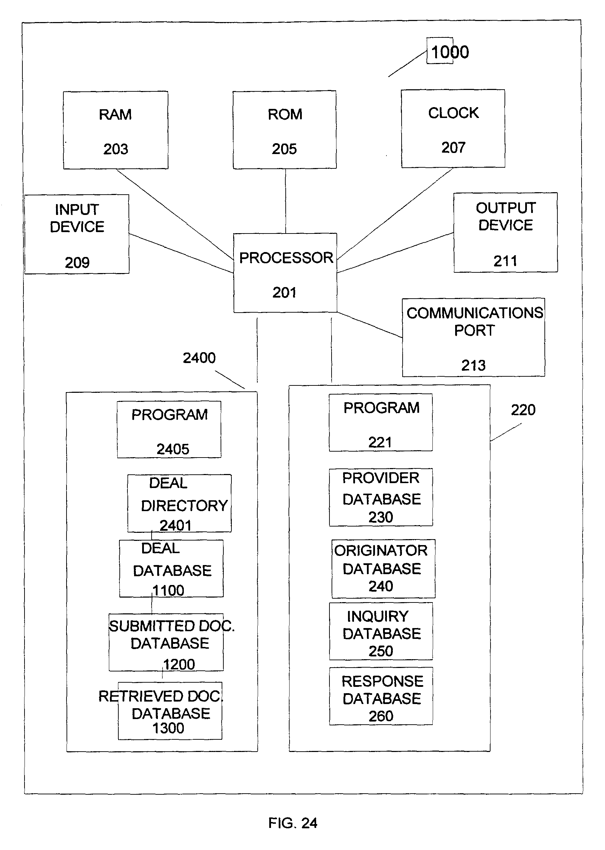

Referring now to Fig. 24, an embodiment of communication server 1000 is illustrated. The communication server 1000 includes analogous components as communication server 101 illustrated in Fig. 2 with the addition of components to support document exchange facility 2400. In particular, document exchange facility 2400 stores program 2405 which includes instructions for controlling the processor 201. The processor 201 performs instructions of the program 2405, and thereby operates in accordance with the present invention, and particularly in accordance with the methods for facilitating the exchange of documents described in detail herein. The program 2405 may be stored in a compressed, uncompiled, and/or encrypted format.

A separate document exchange directory is created for each new deal introduced by an originator. One document exchange directory 2401 is shown for illustrative purposes only, more or fewer document exchange directories can be supported. In a preferred embodiment, the document exchange directory 2401 only exists during the pendency of the deal. Once the deal closes, the documents associated with the particular document exchange directory 2401 created for the associated deal are archived and the document exchange directory 2401 is made available for another deal.

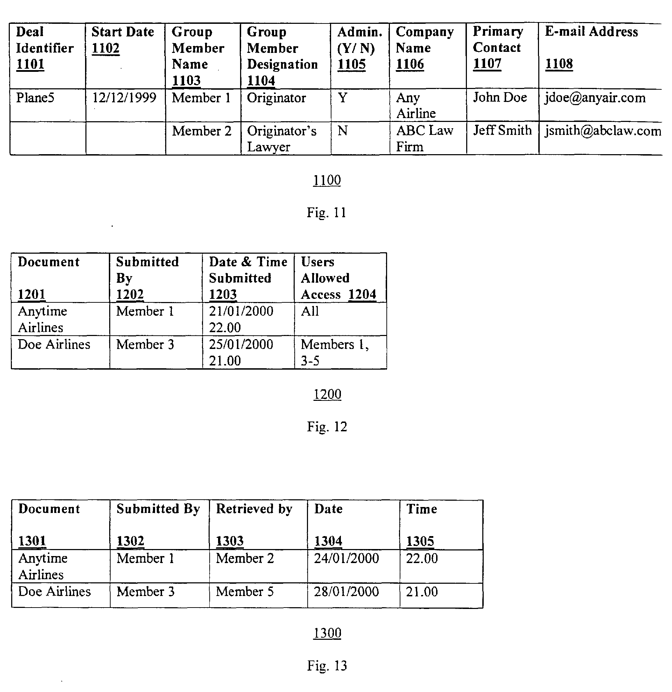

Each document exchange facility maintains data on a particular deal in one or more databases 1100, 1200, 1300, as illustrated in Figs. 11-13. Deal database 1100 stores information related to a particular deal in fields 1101-1110, such as, a deal identifier field 1101, a deal start date field 1102, a group member name field 1103, a group member designation field 1104, an administrator field 1105, company name field 1106, a primary contact field 1107, an e-mail address field 1108, a contact number field 1109, and a password field 1110.

In an alternate embodiment of the present invention, deal database 1100 stores information related to a particular deal, such as information stored in fields 1101-1105. Then, a separate document exchange user database (not shown) stores information of each document exchange user, who is not already an originator or a provider, such as information stored in fields 1106-1109. In such embodiment, the deal database 1100 would store the user name of each user and link to the originator database 230, the provider database 240, or the document exchange user database (not shown) to retrieve the information on that user.

Referring now to Fig. 11, the deal identifier field 1101 stores an identifier, such as a deal name, for each deal. Deal start date field 1102 stores the date on which the document exchange facility was created for the deal identified in field 1101.

Deal database 1100 also stores information related to the users of the document exchange facility created for the deal identified in field 1101. Group member name field 1103 stores the identifier or user name of the registered members who are allowed access to the document exchange facility created for the deal identified in field 1101. The member name may be an identifier, such as member 1, or the name of a corporation or other business entity, or an individual. Group member designation field 1104 stores information indicating the designation of the group member. In an exemplary embodiment, the group member is either the originator or affiliated with the originator, or the provider or affiliated with the provider. Administrator field 1105 stores an indication as to whether the corresponding group member identified in field 1103 is an administrator. Each document exchange facility 1000 may have one or more administrators. In an exemplary embodiment the administrator has the same rights with respect to access to documents, as the originator. However, the administrator is responsible for designating and maintaining the active documents. Typically, the administrator will be the company or individual, such as the originator's attorney or accountant, most involved in the transaction. For example, if a document has been revised several times, the administrator indicates which is the most up to date version of the document. In some instances, the administrator may be responsible for receiving various versions of the document and revising the document to reflect the edits from the various versions of the document.

Company name field 1106 stores the name of the company or business entity of the group member identified in group member field 1103. Primary contact field 1107 stores the name of the individual who is the primary contact at the company identified in field 1106. E-mail address field 1108 and contact number field 1109, store the e-mail address and contact number, such as telephone, mobile, fax, and/or pager number, of the individual identified in primary contact field 1107, and/or the company identified in company name field 1105. In an exemplary embodiment, to facilitate communication between group members, each group member is assigned an e-mail address to use within the document exchange facility. This e-mail address is also stored in e-mail address field 1108. In an alternate embodiment, to encourage group members to submit documents to the document exchange facility, group members are unable to attach documents to e-mail messages using the system assigned e-mail address. Password field 1110 stores the group member's associated password needed to access the document exchange associated with a particular deal.

Submitted document database 1200 illustrated in Fig. 12, stores information related to the documents submitted to the particular document exchange facility 1101 in fields 1201-1204, such as document field 1201, submitted by field 1202, submission date and time field 1203, and user's allowed access field 1204. Referring now to document field 1201, this field stores the name of the document submitted to the document exchange facility 1101. Submitted by field 1202 stores the identifier or name of the group member who submitted the document. Submission date and time field 1203 stores the date and time at which the group member identified in field 1202 submitted the document.

User's allowed access field 1204 stores the identifier or the name of the user(s) allowed access to the corresponding document. When a document is submitted, the individual or group member submitting the document can specify which of the other group members are allowed access to the submitted document. For example, the name or identifier stored in any of group member field 1103, company name field 1105, administrator field 1106, and/or primary contact field 1107, may be identified in user's allowed access field 1204. Thus, for example, only specific individuals within a particular company may be allowed to access a submitted document. In an exemplary embodiment, by default all group members are allowed access. In such embodiment, those wanting to limit access to a submitted document must remove group members from the default list. In yet another alternate embodiment, the administrator has access to all submitted documents.

Referring now to Fig. 13, retrieved document database 1300 stores information related to documents retrieved from the particular document exchange facility 1101 in fields 1301-136, such as document field 1301, submitted by field 1302, retrieved by field 1303, date field 1304, and time field 1305. In an alternate embodiment, retrieved document database 1300 also includes a submission date and time field 1306, which stores information analogous to that stored in submission date and time field 1203.

Document field 1301 and submitted by field 1302 store information analogous to that stored in document field 1201 and submitted by field 1202. Retrieved by field 1303 stores the name or identifier of the group member retrieving the document identified in field 1301. Date field 1304 and time field 1305, store the date and time, respectively, on which the group member identified in field 1303 retrieved the document identified in field 1301.

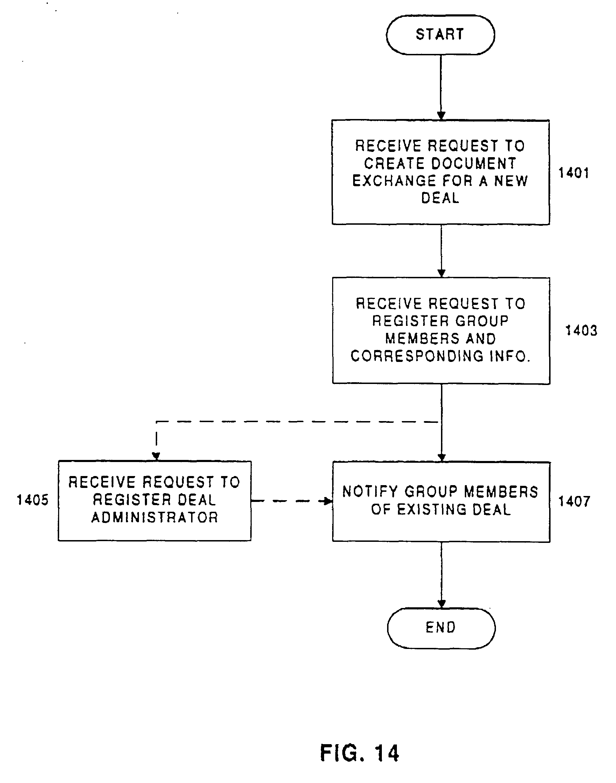

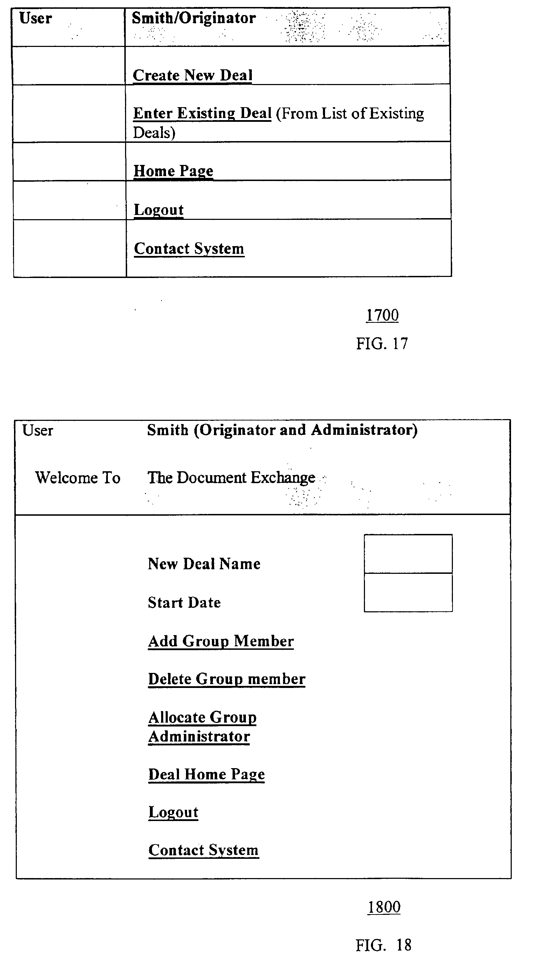

Operation of the document exchange facility 1000 is now explained with reference to the flowchart illustrated in Fig. 14. At step 1401, the document exchange facility receives a request to create a document exchange for a new deal. In one embodiment of the present invention, a document exchange button on a web page, enables a user, such as an originator, to create a new deal or enter an existing deal. An exemplary screen 1700 of such embodiment is illustrated in Fig. 17. When the originator selects "create new deal" to create a document exchange for a new deal, another screen, such as the exemplary screen 1800 illustrated in Fig. 18, is displayed.

To create a document exchange for a new deal, the originator submits a list of group members, who are counterparties to the deal, and their respective information, such as, primary contact information and e-mail addresses, at step 1403. Any new users, such as accountants or lawyers, are allocated user names and passwords by the system 1000. The originator can delete group members as well. The system 1000 stores this information in deal database 1100 illustrated in Fig. 11. These registered users are allowed access to the document exchange for the new deal.

At this step 1403, either the originator or the system 1000 may assign an identifier, such as a name, for the new deal that is stored in deal identifier field 1101 of deal database 1100. A start date may also be assigned and stored in start date field 1102 of deal database 1100.

In an exemplary embodiment, at step 1405, the originator appoints an administrator for the deal, which may be the originator itself or possibly its lawyers.

Then, at step 1407, the system 1000 notifies the registered group members of an existing deal. In an exemplary embodiment, the system 1000 notifies each group member by sending an e-mail message. The message includes the deal identifier stored in deal identifier field 1101, such as the deal name, and the password stored in password field 1110 of deal database 1100. Using this information, registered users can access the document exchange for the particular deal.

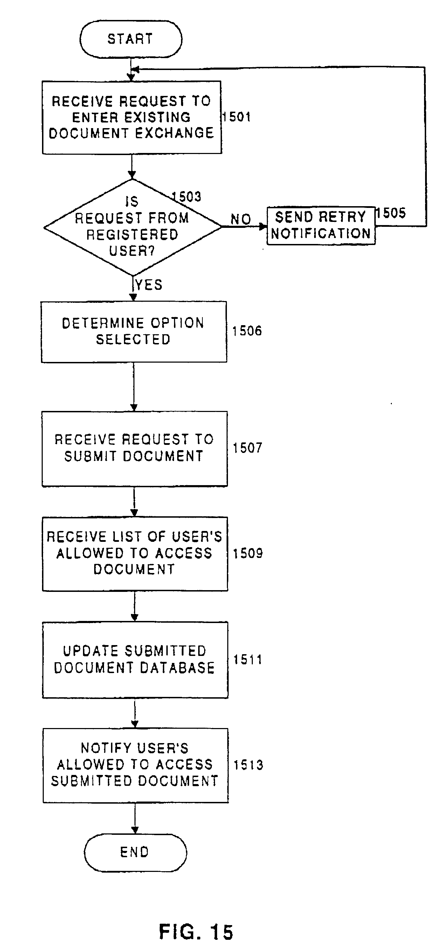

The process of entering an existing document exchange is explained with reference to Fig. 15. At step 1501, a request to enter an existing document exchange is received. For example, referring again to screen 1700 of Fig. 17, a user, such as a provider or an originator, would select "enter existing deal." The user then enters a deal name or user name, and password. At step 1503, the system 1000 determines whether the name and password submitted is valid. The system 1000 searches the deal database 1100 to verify the user attempting to access the document exchange is a registered user. In one embodiment of the present invention, if the name and password are not in the deal database 1100, the system 1000 notifies the user that the submitted name and password are invalid and requests that the user retry submitting a name and password. The process returns to step 1501, and repeats steps 1503 and 1505 for a predetermined number of times or until the system 1000 recognizes the user as a registered user. In an alternate embodiment, if the name and password are not in the deal database 1100, the process ends.

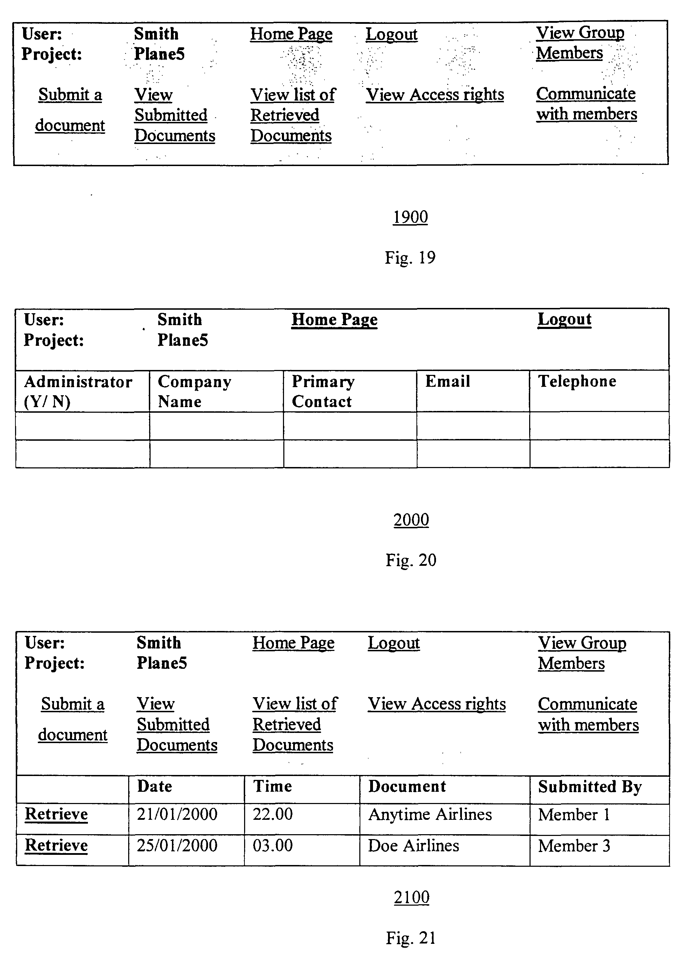

Referring again to step 1503, if the user is a registered user, then the registered user is allowed access to the document exchange for the particular deal. At this point, the registered user has a variety of options. At step 1506, the system 1000 determines which option the user has selected. In the exemplary embodiment of the present invention, the user can view group members, communicate with members, view submitted documents, submit a document, view a list of retrieved documents, retrieve a document, and view access rights with respect to particular documents. An exemplary screen 1900 providing the user access to such options is illustrated in Fig. 19.

If the user selects view group members, the system 1000 displays a list of the group members stored in group member name field 1103 of deal database 1100. An exemplary screen 2000 displaying such list is illustrated in Fig. 20. Any member can view contact details for the other members of the document exchange for the particular deal. This list will also show them who the administrator of the document exchange is, if one has been assigned.

If the user selects communicate with members, the system displays the group members stored in group member name field 1103 and their associated system e-mail address stored in e-mail address field 1108 of deal database 1100. The user can then select the e-mail address of the group member with whom communication is desired. In this way, members of the document exchange can send e-mail messages to each other. In an exemplary embodiment, the e-mail messages are stored on the document exchange website so that they may be viewed at any time.

If the user selects view submitted documents, then the names of documents listed in document field 1201 of document database 1200 are displayed. An exemplary screen 2100 is illustrated in Fig. 21. In an alternate embodiment, only those documents to which the registered user is allowed access are displayed. Other information stored in document database 1200 may also be displayed, such as, information stored in submitted by field 1202 and date and time field 1204.

Referring again to Fig. 15, if the registered user selects submit a document, then this request is received at step 1507. The file is uploaded from the user's server to the system 1000. Any member can submit a document that the member has created or edited. Submitting a document to the system 1000, enables other authorized members to view and edit the document. This process is typically initiated by the originator or administrator submitting the draft master documents. At the time of submitting a document, the author specifies which members of the document exchange are to be given access to the document, at step 1509. In an exemplary embodiment, the default is for all group members to be given access. At step 1511, the document database 1200 is updated to reflect the current list of authorized users. Then at step 1513, authorized members are then notified by email that a new document is available to them.

Referring again to step 1506, if the user selects view retrieved documents, then the information stored in retrieved document database 1300 is displayed, such as document name, group member who submitted the document, group member who retrieved the document, and date and time at which the group member retrieved the document.

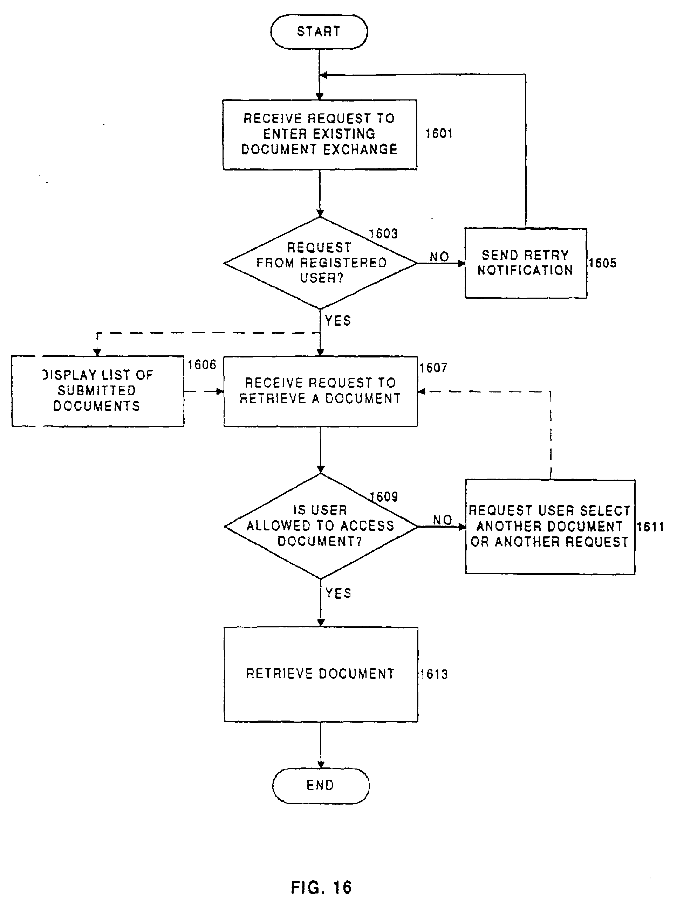

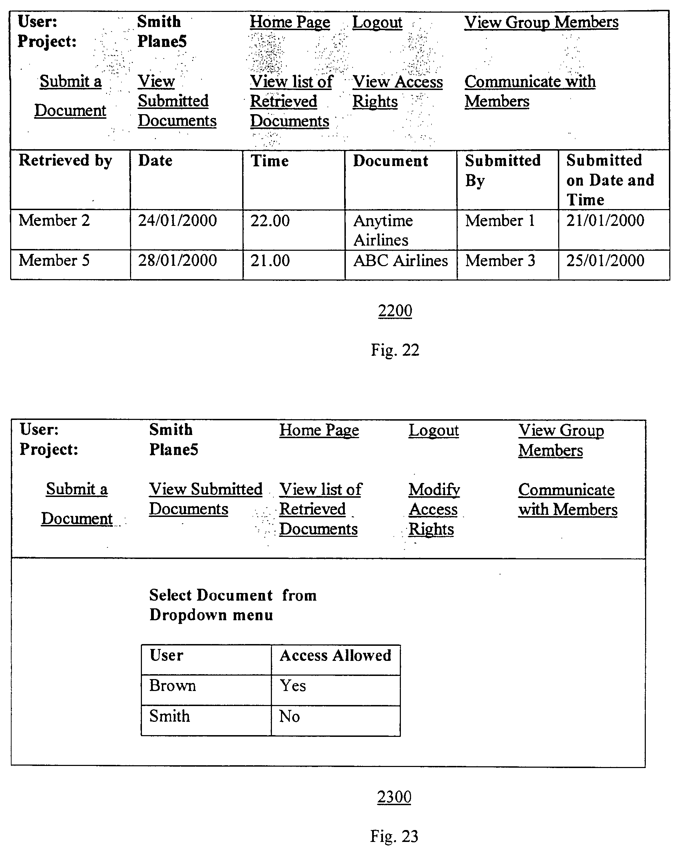

Referring now to Fig. 16, the process of retrieving a document is explained. Steps 1601, 1603, and 1605 are analogous to steps 1501, 1503, and 1505 illustrated in Fig. 15. In one embodiment of the present invention, once it is determined in step 1605 that the user submitting the request to enter the document exchange is a registered user, at step 1606 a list of documents submitted is displayed, such as in screen 2200 illustrated in Fig. 22. "Active" documents are the current master documents, and are at the top of the screen. In an exemplary embodiment, any document which has not previously been retrieved by the member would be highlighted in bold. In an alternate embodiment, only those documents to which the user has authorized access are displayed.

Referring again to screen 2200, the user can select the retrieve button in the row of the table corresponding to document to which the user desires access. At step 1607, the request to retrieve the document is received. Any member can retrieve a document to which it has been given access. In the embodiment of the present invention in which the names of all of the submitted documents are displayed, at step 1609, the system 1000 determines whether the user requesting access to the document is authorized to access the document. Users who do not have access are notified that they are not authorized to access the particular document, at step 1611. Users can then request access to another document, and the process returns to step 1607. Users who do have access see the document displayed at step 1613.

In the embodiment where only the names of the documents to which the user has authorized access are displayed, steps 1609 and 1611 are unnecessary. In this embodiment, when the request to retrieve a document is received at step 1607, the document is retrieved at step 1613. In one embodiment, the user downloads the document to the user's server to view the document. In an alternate embodiment, the document can be retrieved from and viewed from the communication server 101.

Once the document has been retrieved the authorized user can modify the document on the user's own system. When the user is ready, the user can submit the document in the manner discussed with reference to steps 1507, 1509, 1511 and 1513 of Fig. 15.

Referring again to step 1506 of Fig. 15, the registered user can also select to view a list of retrieved documents. Any member can view which documents have been retrieved by the other members in order to monitor progress. An exemplary screen 2200 illustrated in Fig. 22.

Referring again to step 1506 of Fig. 15, any member can view documents that they have previously submitted to see to whom they gave access. The member can then modify these rights if required. An exemplary screen 2300 is illustrated in Fig. 23.

While the method and apparatus of the present invention has been described in terms of its presently preferred and alternate embodiments, those skilled in the art will recognize that the present invention may be practiced with modification and alteration within the spirit and scope of the appended claims. The specifications and drawings are, accordingly, to be regarded in an illustrative rather than a restrictive sense.

Further, even though only certain embodiments have been described in detail, those having ordinary skill in the art will certainly understand that many modifications are possible without departing from the teachings thereof.

## Claims

1. A method for brokering commercial transactions between an originator and a provider through a communications network, the method comprising the steps of:
receiving provider criteria from each of a plurality of providers, wherein at least one of said provider criteria is included in requests for proposals forwarded to said respective provider;
receiving a request for proposal from an originator, the request for proposal including originator criteria, wherein at least one of the originator criteria is included in proposals received by the originator;
comparing the originator criteria included in the request for proposal with the provider criteria of a group of the plurality of providers;
selecting one or more providers from the group of the plurality of providers, the selected one or more providers having at least one of their respective provider criteria matching at least one of the originator criteria;
providing the request for proposal to the selected one or more providers;
receiving a proposal in response to the request for proposal from at least one of the selected one or more providers; and
providing the proposal to the originator.

2. The method of claim 1, **characterized in that** the step of providing the request for proposal to the selected one or more providers comprises providing the request for proposal to the selected one or more providers without disclosing the identity of the originator.

3. The method of claim 1, **characterized in that** the step of receiving a proposal in response to the request for proposal from at least one of the selected one or more providers comprises the steps of:
receiving a plurality of proposals from at least one of the one or more selected providers;
ranking the plurality of proposals; and
notifying the originator of the highest ranked one or more of proposals of the plurality of proposals.

4. The method of claim 3, **characterized in that** the step of ranking the plurality of proposals comprises the steps of:
receiving ranking criteria from the originator;
comparing proposal criteria in each of the plurality of proposals with the ranking criteria;
selecting one or more proposals having the most proposal criteria matching the ranking criteria, wherein said selected one or more proposals are the highest ranked one or more proposals; and
sending a summary report of the highest ranked one or more proposals to the originator.

5. The method of claim 1, **characterized by** the method further comprising the steps of:
receiving a request for clarification of the request for proposal from one of the selected one or more providers;
forwarding the request for clarification to the originator;
receiving a response to the request for clarification from the originator; and
distributing the request for clarification to the selected one or more providers.

6. The method of claim 1, **characterized in that** the provider criteria comprises one or more of industry sector, financing type, asset type, project type, geographic location, amount of funding requested by the originator, credit information, scope of distribution of request for proposal to providers, and deadline for accepting a response to the request for proposal.

7. The method of claim 1, **characterized in that** the step of selecting one or more providers from the plurality of providers comprises the steps of:
storing the provider criteria received from the plurality of providers in a data storage medium;
searching the data storage medium for providers having one or more specified criteria included in their provider criteria, wherein the originator criteria includes said one or more criteria; and
generating an initial distribution list including one or more providers having the one or more specified criteria.

8. The method of claim 7, **characterized by** the method further comprising the steps of:
determining whether the originator has indicated that a provider of the one or more providers on the initial distribution list should not receive the request for proposal; and
removing the provider from the initial distribution list when the originator has indicated the provider should not receive the request for proposal.

9. The method of claim 1, **characterized in that** the group of plurality of providers comprises a group of pre-selected providers provided by the originator.

10. A method according to claim 1, **characterized in that** the method includes the steps of:
storing said provider criteria in a database;
receiving the request for proposal from an originator, the request for proposal having one or more primary criteria;
filtering said database to identify a group of the plurality of providers having provider criteria matching the one or more primary criteria;
selecting one or more providers having provider criteria matching the one or more primary criteria.
